# EUROPEAN PATENT SPECIFICATION

(11) **EP 1 768 290 B1**
(45) Date of publication and mention of the grant of the patent: **24.09.2014**
(21) Application number: 05752907.5
(22) Date of filing: 24.06.2005
(51) Int. Cl.: H04J 11/00, H04L 1/00, H04L 27/26, H04L 25/02

(54) **WIRELESS COMMUNICATION DEVICE**
FUNKKOMMUNIKATIONSGERÄT
DISPOSITIF DE COMMUNICATION PAR RADIO

(30) Priority: 29.06.2004 JP 2004192184
(43) Date of publication of application: 28.03.2007
(73) Proprietor: Sharp Kabushiki Kaisha, Osaka-shi, Osaka 545-8522 (JP)
(72) Inventor: ONODERA, Takashi, 2840003 (JP)
(74) Representative: Treeby, Philip David William
(86) International application number: PCT/JP2005/011582
(87) International publication number: WO 2006/001357

(56) References cited:
- WO-A1-00/54473
- WO-A1-03/085867
- WO-A2-03/001681
- WO-A2-2004/038986
- DE-A1- 10 162 546
- JP-A- 11 355 374
- JP-A- 2002 051 375
- JP-A- 2003 169 036
- JP-A- 2003 304 214
- THOMAS KELLER ET AL: "Adaptive Modulation Techniques for Duplex OFDM Transmission", IEEE TRANSACTIONS ON VEHICULAR TECHNOLOGY, IEEE SERVICE CENTER, PISCATAWAY, NJ, US, vol. 49, no. 5, 1 September 2000 (2000-09-01), XP011064120, ISSN: 0018-9545
- REDDY S B ET AL: "An efficient blind modulation detection algorithm for adaptive OFDM systems", VEHICULAR TECHNOLOGY CONFERENCE, 2003. VTC 2003-FALL. 2003 IEEE 58TH ORLANDO, FL, USA 6-9 OCT. 2003; [IEEE VEHICULAR TECHNOLGY CONFERENCE], PISCATAWAY, NJ, USA,IEEE, US, vol. 3, 6 October 2003 (2003-10-06), pages 1895-1899, XP010701181, DOI: 10.1109/VETECF.2003.1285354 ISBN: 978-0-7803-7954-1

## Description

### Technical Field

The present invention relates to a wireless communication device applied to Time Division Duplex (hereinafter referred to as "TDD") using a multi-carrier transmission system.

### Background Art

In recent years, the number of users demanding higher speed in wireless communication systems is increasing. As a system capable of achieving higher speed and larger capacity of a wireless communication system, a multi-carrier transmission system which performs communication by transmitting information on a plurality of sub-carriers has been known. The multi-carrier transmission system is a system in which an information signal is transmitted in parallel by a frequency division multiplex using a plurality of sub-carriers with a narrow bandwidth allocated at certain frequency intervals. More specifically, an example is an Orthogonal Frequency Division Multiplexing (hereinafter referred to as "OFDM") transmission system.

When a high speed transmission is performed using a single-carrier transmission system, frequency characteristic of an entire band is not constant due to an effect of frequency selective fading. This is equivalent to an occurrence of interference between codes in a time domain and becomes a cause of significantly degrading transmission quality.

In contrast, since, in a multi-carrier transmission system, a channel fluctuation of each sub-carrier can be considered to be uniform fading even in an environment of frequency selective fading, an effect of frequency selective fading can be reduced. Also, since, in the multi-carrier transmission, received power (or received SNR (Signal to Noise Power Ratio) and received SINR (Signal to Interference plus Noise Power Ratio)) is different for each sub-carrier, a high-efficiency communication can be performed using an adaptive modulation method (adaptive sub-carrier modulation method) in which appropriate modulation parameters are provided to each sub-carrier according to channel conditions, compared with a case in which modulation parameters such as a modulation level, a coding rate, and a coding mode are provided to all sub-carriers in common.

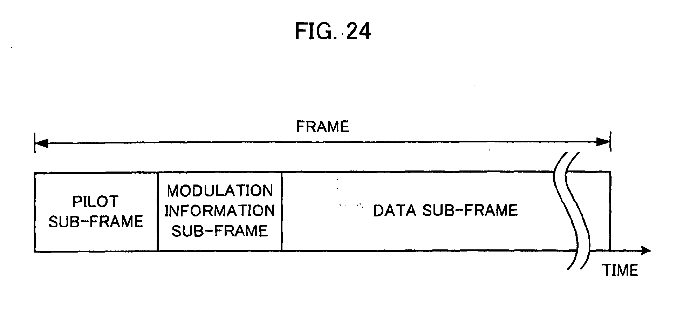

A wireless communication device that performs wireless communication by a conventional adaptive sub-carrier modulation method uses a frame as shown in Fig. 24. That is, as shown in the figure, the frame is composed of a pilot sub-frame for performing synchronous detection and channel condition estimation, a modulation information sub-frame for notifying a receiving side of modulation parameters of each sub-carrier, and a data sub-frame used for transmission of information data (See, for example, Non-Patent Document 1, Non-Patent Document 2, and Non-Patent Document 3). Modulation parameters with generally best error rate characteristics are predetermined for use to transmit the modulation information sub-frame and are used as modulation parameters common to all sub-carriers. The data sub-frame is adaptively modulated for each sub-carrier by using modulation parameters specified in the modulation information sub-frame. Besides, when required by a communication system, in addition to the above three sub-frames, a sub-frame containing, for example, information indicating a frame length may also be separately inserted.

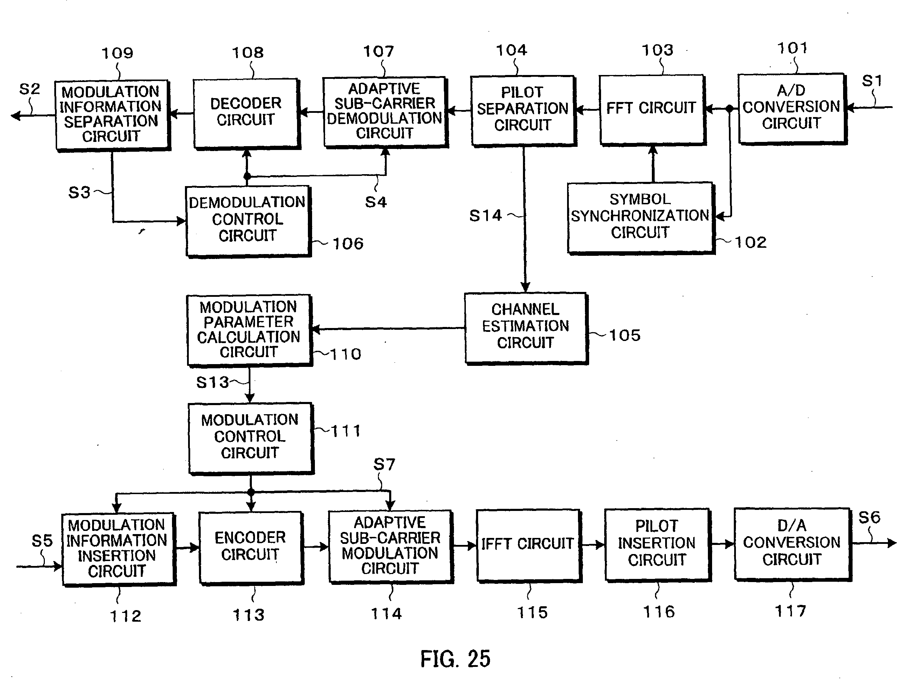

Fig. 25 is a diagram showing an outline configuration of a conventional wireless communication device that performs wireless communication in a multi-carrier transmission system. In the figure, an A/D conversion circuit 101 converts a received signal S1 in a frame format shown in Fig. 24 into a digital signal. A symbol synchronization circuit 102 synchronizes OFDM symbols using the pilot sub-frame in the received signal S1. An FFT circuit 103 performs a Fourier transformation of the received signal, which has been converted into the above digital signal, into a signal for each sub-carrier. A pilot separation circuit 104 separates the pilot sub-frame from the received signal S1 and outputs it to a channel estimation circuit 105. The channel estimation circuit 105 estimates channel conditions based on a receiving state of the pilot sub-frame.

A demodulation control circuit 106 inputs a received frame modulation parameter control signal S4 that instructs to demodulate the modulation information sub-frame using predetermined modulation parameters into at least one of an adaptive sub-carrier demodulation circuit 107 and a decoder circuit 108. The adaptive sub-carrier demodulation circuit 107 demodulates the received signal, which has been converted into a signal for each sub-carrier, corresponding to a modulation level based on the received frame modulation parameter control signal S4. When no S4 is input, demodulation is performed corresponding to a predetermined modulation level. The decoder circuit 108 decodes the above demodulated signal corresponding to at least one of the coding rate and the coding mode based on the received frame modulation parameter control signal S4. If no S4 is input, decoding is performed corresponding to a predetermined coding rate and coding mode. A modulation information separation circuit 109 extracts the modulation information sub-frame, inputs modulation parameters (received frame modulation parameter S3) of each sub-carrier indicated there into the demodulation control circuit 106, and outputs received data S2. The demodulation control circuit 106 updates the received frame modulation parameter control signal S4 that instructs to demodulate or decode the data sub-frame according to the above received frame modulation parameter S3 and inputs the signal S4 into at least one of the adaptive sub-carrier demodulation circuit 107 and the decoder circuit 108.

A modulation parameter calculation circuit 110, on the other hand, calculates modulation parameters of the data sub-frame in a transmission frame based on a channel estimation result input from the channel estimation circuit 105 and inputs the calculation result into a modulation control circuit 111. The modulation control circuit 111 inputs a transmission frame modulation parameter control signal S7 that instructs to encode or modulate according to modulation parameters calculated by the modulation parameter calculation circuit 110 into at least one of a modulation information insertion circuit 112 that inserts modulation information into the sub-frame, a encoder circuit 113, and an adaptive sub-carrier modulation circuit 114. The encoder circuit 113 encodes transmission data S5 according to at least one of the coding rate and the coding mode based on a transmission frame modulation parameter control signal S7. In addition, if no S7 is input, encoding is performed based on a predetermined coding rate and coding mode. The adaptive sub-carrier modulation circuit 114 modulates each sub-carrier by a modulation level based on the transmission frame modulation parameter control signal S7. If no S7 is input, modulation is performed by a predetermined modulation level.

An IFFT circuit 115 performs an inverse Fourier transformation of the signal for each sub-carrier modulated by the adaptive sub-carrier modulation circuit 114 to generate a digital signal of a transmission signal. A pilot insertion circuit 116 inserts a pilot sub-frame into a transmission frame before a data sub-frame. Incidentally, the pilot sub-frame can also be inserted in a MAC layer in advance or in a stage prior to the IFFT circuit 115. A D/A conversion circuit 117 converts the digital signal of the transmission frame into which the pilot sub-frame has been inserted into an analog signal to output a transmission signal S6.

That is, in the above conventional wireless communication device, as described in Non-Patent Document 1, a modulation parameter of each sub-carrier of a transmission frame is determined by following a procedure of extracting a pilot sub-frame from a received frame, estimating channel conditions from a receiving state of the pilot sub-frame, and calculating modulation parameters of each sub-carrier of the transmission frame based on an estimation result of the above channel conditions.
Non-Patent Document 1: "Study on the OFDM/TDD transmission system using adaptive sub-carrier modulation" by Maehara et al., Institute of Electronics, Information and Communication Engineers general meeting, Mar. 2001, B-5-100, P. 498
Non-Patent Document 2: "Adaptive OFDM modulation method using multi-level transmission power control for high-speed data transmission" by Yoshiki et al., IEICE TRANSACTIONS on Communications, Jul. 2001, Vol. J84-B, No. 7, P. 1141-1150
Non-Patent Document 3: "Study on interference power estimation for multi-level transmission power control in a one-cell repetitive OFDM/TDMA system" by Yoshiki et al., Institute of Electronics, Information and Communication Engineers technical report, Jan. 2003, RCS2002-240, P. 65-70
Non-Patent Document 4: "Supplement to IEEE Standard for Information technology - Telecommunications and information exchange between systems - Local and metropolitan area networks - Specific requirements - Part 11: Wireless LAN Medium Access Control (MAC) and Physical Layer (PHY) specifications: High-speed Physical Layer in the 5 GHz Band", IEEE Std 802.11a-1999, November 1999
Non-Patent Document 5: "IEEE Standard for Information technology - Telecommunications and information exchange between systems - Local and metropolitan area networks - Specific requirements - Part 11: Wireless LAN Medium Access Control (MAC) and Physical Layer (PHY) specifications", IEEE Std 802.11, 1999

Document WO 2004/038986 A2 (QUALCOMM INC [US]) 6 May 2004 (2004-05-06) relates to closed-loop rate control and discloses a wireless communication device (see par. 1057) that performs wireless communication in a multi-carrier transmission system using a frame composed of a plurality of sub-frames, comprising an extraction part extracting a modulation parameter from a modulation information sub-frame for constituting said frame received and notifying a receiving side of said modulation parameter of each sub-carrier (see par. 1035: *Selector 174 then selects a transmission mode for parallel channel x based on the received information*); and a modulation control part that performs at least one of coding of transmission data and modulation of each sub-carrier using said stored modulation parameter when transmitting a frame to a transmission source of said frame (see par. 1035: *determines the data rate, coding, and modulation controls for parallel channel x*).

### Disclosure of the Invention

As described above, a frame used for communication by a conventional adaptive sub-carrier modulation level requires insertion of a modulation information sub-frame for notifying a receiving side of modulation parameters of each sub-carrier.

However, inserting the modulation information sub-frame causes problems described below. That is, the modulation information sub-frame becomes longer in proportion to the number of sub-carriers and that of selectable modulation parameters, and throughput of communication drops due to overheads thereof. For example, if the number of sub-carriers is 52 and that of selectable modulation parameters is 8 (3 bits), a length of the modulation information sub-frame will be 156 bits long. This particularly has a significant effect on a frame with a short data sub-frame such as an Acknowledge frame (hereinafter referred to as an "ACK frame") in response to a received frame. Also, for example, an equivalent length of a data sub-frame in an ACK frame of the 5 GHz band wireless LAN standard IEEE802.11a of an OFDM system in US is 128 bits (See Non-Patent Document 4 and Non-Patent Document 5). Furthermore, with an increasing frame length, a transmission operation time will be longer and power consumption of a communication terminal becomes larger.

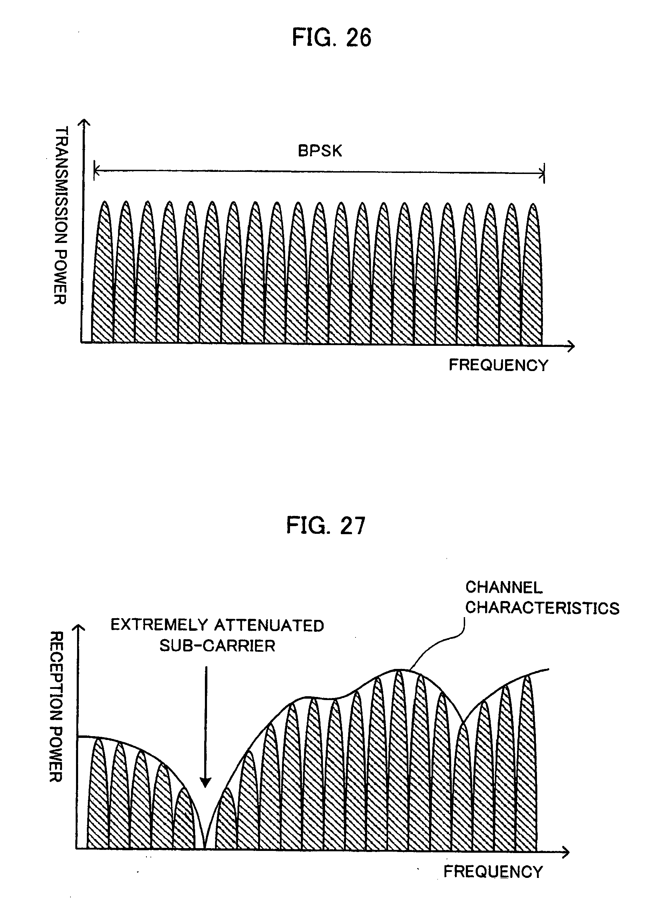

Since the modulation information sub-frame cannot be a target for adaptive sub-carrier modulation, as shown in Figs. 26 and 27, information bits must be carried also by sub-carriers whose channel conditions are extremely bad. Thus, information bits of modulation parameters carried by such sub-carriers may be lost because they cannot be received correctly. In this case, reception of a relevant frame will fail.

If the channel conditions are bad, a bit error rate can be controlled to be lower for a data sub-frame transmitted by performing adaptive sub-carrier modulation according to channel conditions than for a modulation information sub-frame transmitted with single modulation parameters using all sub-carriers. Thus, the frame error rate will be dominated by the error rate of the modulation information sub-frame.

Furthermore, a communication device based on a conventional adaptive sub-carrier modulation method requires, when transmitting a frame to a transmission source of a received frame, a circuit for estimating channel conditions from a receiving state of the pilot sub-frame of the received frame and a circuit for calculating modulation parameters so that desired reception characteristics can be obtained for each sub-carrier of a transmission frame based on an estimation result thereof, increasing a circuit size. Such an increase in circuit size is not preferable particularly when miniaturization and lower power consumption are demanded by, for example, a user terminal in a communication system composed of access points and user terminals because it could lead to an increase in power consumption and manufacturing costs.

The present invention has been developed in consideration of the above situation and an object thereof is to provide a wireless communication device that can reduce the circuit size and power consumption during transmission while improving throughput.

According to a first aspect of the present invention there is provided a terminal unit operable to perform wireless communication between an access point and said terminal unit in a multi-carrier transmission system using a frame composed of a plurality of sub-frames, comprising: an extraction part operable to extract a first modulation parameter from a modulation information sub-frame which constitutes a part of a downlink frame received from said access point; a storage part operable to store said first modulation parameter; and a modulation control part having a plurality of predetermined modulation parameters, and operable to perform at least one of coding of transmission data and modulation of each sub-carrier using a second modulation parameter which is one of the predetermined modulation parameters for an uplink frame to said access point, wherein said second modulation parameter is derived, by said modulation control part, based on said first modulation parameter and a predetermined rule common to said terminal unit and said access point, said predetermined rule including that information transmission speed for said second modulation parameter being lower than information transmission speed for said first modulation parameter.

Since, when a frame is transmitted to a transmission source of a frame, as described above, a modulation parameter used by the transmission source is stored and at least one of coding of transmission data and modulation of each sub-carrier is performed using the stored modulation parameter, it becomes unnecessary to insert a modulation information sub-frame for transmitting the modulation parameter to the transmission source into a transmission frame. As a result, it becomes possible to improve throughput and reduce power consumption during transmission. Also, since the modulation information sub-frame is unnecessary, a reception failure of frames due to an error of the modulation information sub-frame can be avoided. Furthermore, since the estimation circuit of channel conditions and the modulation parameter calculation circuit become unnecessary, it becomes possible to reduce the circuit size and power consumption.

The arrangement may comprise a determination part for determining whether or not the received frame is addressed to an own station, wherein when it is determined that the received frame is addressed to the own station, the storage part stores the modulation parameter extracted from the modulation information sub-frame of the frame.

Since it is determined whether a received frame is addressed to an own station, as described above, it becomes possible to realize a wireless communication system that performs a communication by accommodating a plurality of wireless communication devices.

The modulation parameter may contain at least one of a modulation level of each sub-carrier, a coding rate of transmission data, and a coding mode of transmission data, and information indicating that no sub-carrier exists or a carrier hole exists that does not transport information.

Since, as described above, at least one of the modulation level of each sub-carrier, the coding rate of transmission data, and the coding mode of transmission data, and information indicating that no sub-carrier exists or a carrier hole exists that does not transport information are used as modulation parameters, it becomes possible to realize a wireless communication device according to the present invention and a wireless communication system composed of the wireless communication devices without making major modifications to conventional wireless communication devices and a wireless communication system. As a result, it becomes possible to reduce costs for realizing them and shorten a time required until realizing them.

The arrangement may comprise a table composed of a plurality of modulation parameters and a rank order attached to each of the modulation parameters, wherein when transmitting a frame to the transmission source of the frame, the modulation control part performs at least one of coding of transmission data and modulation of each sub-carrier using either the stored modulation parameter or a modulation parameter extracted from the table.

When a frame is transmitted to a transmission source of a frame, as described above, a modulation parameter used by the transmission source is stored and either the stored modulation parameter or a modulation parameter extracted from the table is used. Thus, if the stored modulation parameter is used, it becomes unnecessary to insert a modulation information sub-frame for transmitting modulation parameters to the transmission source into a transmission frame, making it possible to improve throughput and reduce power consumption during transmission. Since, on the other hand, the table has a plurality of modulation parameters, any one of modulation parameters can be selected for use according to conditions. This makes it possible to respond to channel condition fluctuations and the like more flexibly. Note that a rank order of modulation parameters in the table may be added in descending order or ascending order of, for example, an error rate indicating a ratio of error data to transmission data under the same channel conditions, a ratio of a sub-carrier to noise power required for obtaining the same error rate, or an information transmission speed.

When transmitting a frame to the transmission source of the frame, the modulation control part may search the table to identify a rank order of the modulation parameter stored in the storage part, extract a modulation parameter whose rank order is different from that of the modulation parameter stored in the storage part by N (N is a natural number) or more from the table, and perform at least one of coding of transmission data and modulation of each sub-carrier using the extracted modulation parameter.

Since, as described above, a modulation parameter whose rank order is different from that of the stored modulation parameter by N (N is a natural number) or more is used, for example, if the rank order of modulation parameters is in descending order of an error rate indicating the ratio of error data to transmission data under the same channel conditions, the ratio of a sub-carrier to noise power required for obtaining the same error rate, or the information transmission speed, receiving characteristics improve and it becomes possible to improve resistance to channel condition fluctuations and reduce the error rate by using a modulation parameter whose rank is lower than that of the stored modulation parameter by N or more.

When no modulation parameter exists in the table whose rank order is different from that of the modulation parameter stored in the storage part by N (N is a natural number) or more, the modulation control part may utilize a modulation parameter that indicates a relevant sub-carrier to be a carrier hole.

Since, as described above, a relevant sub-carrier can be made a carrier hole when no modulation parameter exists in the table whose rank order is different from that of the stored modulation parameter by N (N is a natural number) or more, for example, if the rank order of modulation parameters is in descending order of the error rate indicating the ratio of error data to transmission data under the same channel conditions, the ratio of a sub-carrier to noise power required for obtaining the same error rate, or the information transmission speed, and no modulation parameter exists in the table whose rank order is lower than that of the stored modulation parameter by N or more, an occurrence of errors in the relevant sub-carrier can be suppressed because the relevant sub-carrier can be made a carrier hole.

When the modulation parameter stored in the storage part does not make the relevant sub-carrier be a carrier hole and no modulation parameter exists in the table whose rank order is different from that of the modulation parameter stored in the storage part by N (N is a natural number) or more, the modulation control part may extract a modulation parameter of a lowest or highest rank order from the table to use it, while when the modulation parameter stored in the storage part indicates the relevant sub-carrier to be a carrier hole, the modulation control part utilizes the modulation parameter stored in the storage part.

If, as described above, the stored modulation parameter does not indicate the relevant sub-carrier to be a carrier hole and no modulation parameter exists in the table whose rank order is different from that of the stored modulation parameter by N (N is a natural number) or more, for example, if the rank order of modulation parameters is in descending order of the error rate indicating the ratio of error data to transmission data under the same channel conditions, the ratio of a sub-carrier to noise power required for obtaining the same error rate, or the information transmission speed, and no modulation parameter exists in the table whose rank order is lower than that of the stored modulation parameter by N or more, it becomes possible to improve resistance to channel condition fluctuations and reduce the error rate using a modulation parameter excellent in receiving characteristics by extracting a modulation parameter of the lowest rank order from the table and using it. Since, if the rank order is attached as described above and no modulation parameter exists in the table whose rank order is lower than that of the stored modulation parameter by N or more, the relevant sub-carrier can be made a carrier hole by using the stored modulation parameter, an occurrence of errors in the relevant sub-carrier can be suppressed. As a result, it becomes possible to simplify processing, improve the processing speed, and reduce power consumption.

The arrangement may comprise a detecting part for detecting a rate of fluctuation of channel condition, wherein the modulation control part increases the N (N is a natural number) if the detected rate is high, and decreases the N (N is a natural number) if the detected rate is low.

Since, as described above, the rate of channel condition fluctuations is detected and, if the detected speed is high, N (N is a natural number) is increased, it becomes possible to reduce an effect of frequency selective fading and perform highly efficient communication. Since, on the other hand, if the detected rate of channel condition fluctuations is low, N is increased, it becomes possible to improve resistance to channel fluctuations and reduce the error rate.

When transmitting a frame to the transmission source of the frame, the modulation control part may extract a single modulation parameter from the table to use it and search the table to identify the rank order of a modulation parameter stored in the storage part, and if the rank order of the modulation parameter stored in the storage part indicates that the frame is more likely to be received by a transmission destination than the extracted single modulation parameter, the modulation control part may utilize a modulation parameter that indicates the relevant sub-carrier to be a carrier hole.

Since, as described above, a single modulation parameter is used as a modulation parameter of a transmission frame, processing related to coding for transmission data, processing related to adaptive sub-carrier modulation, and control for the above processing are no longer needed and a circuit configuration can be simplified. Since, for example, if the rank order of modulation parameters is in descending order of the error rate indicating the ratio of error data to transmission data under the same channel conditions, the ratio of a sub-carrier to noise power required for obtaining the same error rate, or the information transmission speed, and the rank order of the stored modulation parameter is lower than that of the single modulation parameter, the relevant sub-carrier can be made a carrier hole, an occurrence of errors in such a sub-carrier can be suppressed. As a result, it becomes possible to simplify processing, improve a processing speed, and reduce power consumption.

When transmitting a frame to the transmission source of the frame, the modulation control part may extract a single modulation parameter from the table to use it and search the table to identify the rank order of a modulation parameter stored in the storage part, if the modulation parameter stored in the storage part does not indicate the relevant sub-carrier to be a carrier hole and the rank order of the modulation parameter stored in the storage part indicates that the frame is more likely to be received by a transmission destination than the extracted single modulation parameter, the modulation control part may extract the modulation parameter stored in the storage part only for the relevant sub-carrier to use it, and if the modulation parameter stored in the storage part indicates the relevant sub-carrier to be a carrier hole, the modulation control part utilizes the modulation parameter stored in the storage part.

Since, as described above, a single modulation parameter is used as a modulation parameter of a transmission frame, processing related to coding for transmission data, processing related to adaptive sub-carrier modulation, and control for the above processing are no longer needed and a circuit configuration can be simplified. Since, for example, if the rank order of modulation parameters is in descending order of the error rate indicating the ratio of error data to transmission data under the same channel conditions, the ratio of a sub-carrier to noise power required for obtaining the same error rate, or the information transmission speed, and the rank order of the stored modulation parameter is lower than that of the single modulation parameter, the stored modulation parameter is extracted and used only for the relevant sub-carrier, receiving characteristics improve and it becomes possible to improve resistance to channel condition fluctuations and reduce the error rate. Furthermore, if the stored modulation parameter indicates the relevant sub-carrier to be a carrier hole, the relevant sub-carrier can be made a carrier hole by using the stored modulation parameter and thus an occurrence of errors in such a sub-carrier can be suppressed. As a result, it becomes possible to simplify processing, improve the processing speed, and reduce power consumption.

The modulation control part may extract a modulation parameter of a lowest or highest rank order from the table to use it when transmitting a frame to the transmission source of the frame, and the modulation control part may utilize a modulation parameter stored in the storage part when the modulation parameter stored in the storage part indicates a relevant sub-carrier to be a carrier hole.

Since, as described above, a modulation parameter of the lowest or highest rank order is extracted from the table to use it, for example, if the rank order of modulation parameters is in descending order of the error rate indicating the ratio of error data to transmission data under the same channel conditions, the ratio of a sub-carrier to noise power required for obtaining the same error rate, or the information transmission speed, it becomes possible to improve resistance to channel condition fluctuations and reduce the error rate by using a modulation parameter of the lowest rank order. If the stored modulation parameter indicates the relevant sub-carrier to be a carrier hole, the relevant sub-carrier can be made a carrier hole by using the stored modulation parameter and thus an occurrence of errors in such a sub-carrier can be suppressed. As a result, it becomes possible to simplify processing, improve the processing speed, and reduce power consumption.

When transmitting the frame to the transmission source of the frame, the modulation control part incorporates into a transmission frame, one of information showing the rank order in the table of utilized modulation parameter, information showing a rank order number N (N is a natural number) by which the rank order of the modulation parameter stored in the storage part has shifted, and information showing the utilized single modulation parameter.

Since, as described above, one of information showing the rank order in the table of the utilized modulation parameter, information showing a rank order number N (N is a natural number) by which the rank order of the modulation parameter stored in the storage part has shifted, and information showing a utilized single modulation parameter is incorporated into a transmission frame, the receiving side can be notified of the utilized modulation parameter. Since no modulation information sub-frame is transmitted in the present invention, the receiving side can reliably be notified of the modulation parameter by incorporating information about the modulation parameter into the transmission frame. Incidentally, by arranging a shifted rank order number N (N is a natural number) and a single modulation parameter in advance for a system, the need for incorporating information about the shifted rank order number N (N is a natural number) and the single modulation parameter can be eliminated.

According to a second aspect of the present invention there is provided an access point that is operable to perform wireless communication between said access point and a terminal unit in a multi-carrier transmission system using a frame composed of a plurality of sub-frames, comprising: a modulation parameter storage part operable to store a first modulation parameter of each sub-carrier of a down link frame to be transmitted to the terminal unit; and a demodulation control part having a plurality of predetermined modulation parameters, and operable to perform at least one of decoding of received data and demodulation of each sub-carrier using a second modulation parameter which is one of the predetermined modulation parameters for an uplink frame received from said terminal unit wherein said second modulation parameter is derived, by said demodulation control part, based on said first modulation parameter and a predetermined rule common to said terminal unit and said access point, said predetermined rule including that information transmission speed for said second modulation parameter being lower than information transmission speed for said first modulation parameter.

Since, as described above, a modulation parameter of each sub-carrier of a frame to be transmitted is stored and, when a frame is received from a transmission destination of the frame, the stored modulation parameter is used, the transmission destination can transmit a frame containing no modulation information sub-frame. This makes it possible to construct a wireless communication system that improves throughput and reduces power consumption during transmission.

The arrangement may comprise a table composed of a plurality of modulation parameters and a rank order attached to each of the modulation parameters, wherein when receiving a frame from the transmission destination of the frame, the demodulation control part identifies the rank order in the table of the modulation parameter stored in the modulation parameter storage part and extracts a modulation parameter whose rank order is different from that of the modulation parameter stored in the modulation parameter storage part by N (N is a natural number) from the table to use it and, if no modulation parameter exists in the table whose rank order is different from that of the modulation parameter stored in the modulation parameter storage part by N (N is a natural number), the demodulation control part utilizes a modulation parameter that indicates a relevant sub-carrier to be a carrier hole.

Since, as described above, a modulation parameter whose rank order is different from that of the stored modulation parameter by N (N is a natural number) is used, for example, if the rank order of modulation parameters is in descending order of the error rate indicating the ratio of error data to transmission data under the same channel conditions, the ratio of a sub-carrier to noise power required for obtaining the same error rate, or the information transmission speed, receiving characteristics during reception improve and it becomes possible to improve resistance to channel condition fluctuations and reduce the error rate by using a modulation parameter whose rank order is lower than that of the stored modulation parameter by N or more. Since, if the rank order is attached as described above and no modulation parameter exists in the table whose rank order is lower than that of the stored modulation parameter by N or more, the relevant sub-carrier can be made a carrier hole by using the stored modulation parameter, an occurrence of errors in the relevant sub-carrier can be suppressed. As a result, it becomes possible to simplify processing, improve the processing speed, and reduce power consumption.

The arrangement may comprise a table composed of a plurality of modulation parameters and a rank order attached to each of the modulation parameters, wherein when receiving a frame from the transmission destination of the frame, the demodulation control part identifies the rank order in the table of the modulation parameter stored in the modulation parameter storage part and extracts a modulation parameter whose rank order is different from that of the modulation parameter stored in the modulation parameter storage part by N (N is a natural number) from the table to use it, if the modulation parameter stored in the modulation parameter storage part does not indicate a relevant sub-carrier to be a carrier hole and no modulation parameter exists in the table whose rank order is different from that of the modulation parameter stored in the modulation parameter storage part by N (N is a natural number) or more, the demodulation control part extracts a modulation parameter of a lowest or highest rank order to use it, and if the modulation parameter stored in the modulation parameter storage part indicates the relevant sub-carrier to be a carrier hole, the demodulation control part utilizes the modulation parameter stored in the modulation parameter storage part.

Since, as described above, a modulation parameter of the lowest or highest rank order is extracted from the table to use it, for example, if the rank order of modulation parameters is in descending order of the error rate indicating the ratio of error data to transmission data under the same channel conditions, the ratio of a sub-carrier to noise power required for obtaining the same error rate, or the information transmission speed, it becomes possible to improve resistance to channel condition fluctuations and reduce the error rate by using modulation parameters of the lowest rank order. If the stored modulation parameter indicates the relevant sub-carrier to be a carrier hole, the relevant sub-carrier can be made a carrier hole by using the stored modulation parameter and thus an occurrence of errors in such a sub-carrier can be suppressed. As a result, it becomes possible to simplify processing, improve the processing speed, and reduce power consumption.

The arrangement may comprise a table composed of a plurality of modulation parameters and a rank order attached to each of the modulation parameters, wherein when receiving a frame from the transmission destination of the frame, the demodulation control part extracts a single modulation parameter from the table to use it and searches the table to identify the rank order of the modulation parameter stored in the modulation parameter storage part and, if the rank order of the modulation parameter stored in the modulation parameter storage part indicates that the frame is more likely to be received by the transmission destination than the extracted single modulation parameter, the demodulation control part utilizes the modulation parameter that indicates a relevant sub-carrier to be a carrier hole.

Since, as described above, a single modulation parameter is extracted from the table to use it when a frame is received from the transmission destination of the frame, a transmitting side can transmit a frame that contains no modulation information sub-frame so that it becomes possible to improve throughput and construct a wireless communication system in which power consumption during transmission is reduced. Since, for example, if the rank order of modulation parameters is in descending order of the error rate indicating the ratio of error data to transmission data under the same channel conditions, the ratio of a sub-carrier to noise power required for obtaining the same error rate, or the information transmission speed, and the rank order of the stored modulation parameter is lower than that of the single modulation parameter, the relevant sub-carrier can be made a carrier hole, an occurrence of errors in such a sub-carrier can be suppressed. As a result, it becomes possible to simplify processing, improve the processing speed, and reduce power consumption.

The arrangement may comprise a table composed of a plurality of modulation parameters and a rank order attached to each of the modulation parameters, wherein when receiving a frame from the transmission destination of the frame, the demodulation control part extracts a single modulation parameter from the table to use it and searches the table to identify the rank order of the modulation parameter stored in the modulation parameter storage part, if the modulation parameter stored in the modulation parameter storage part does not indicate a relevant sub-carrier to be a carrier hole and the rank order of the modulation parameter stored in the modulation parameter storage part indicates that the frame is more likely to be received by the transmission destination than the extracted single modulation parameter, the demodulation control part extracts the modulation parameter stored in the modulation parameter storage part to be used only for the relevant sub-carrier, and if the modulation parameter stored in the modulation parameter storage part indicates the relevant sub-carrier to be a carrier hole, the demodulation control part utilizes the modulation parameter stored in the modulation parameter storage part.

Since, as described above, a single modulation parameter is extracted from the table to use it when a frame is received from the transmission destination of the frame, a transmitting side can transmit a frame that contains no modulation information sub-frame so that it becomes possible to improve throughput and construct a wireless communication system in which power consumption during transmission is reduced. Since, for example, if the rank order of modulation parameters is in descending order of the error rate indicating the ratio of error data to transmission data under the same channel conditions, the ratio of a sub-carrier to noise power required for obtaining the same error rate, or the information transmission speed, and the rank order of the stored modulation parameter is lower than that of the single modulation parameter, the stored modulation parameter is extracted and used only for the relevant sub-carrier, receiving characteristics during reception improve and it becomes possible to improve resistance to channel condition fluctuations and reduce the error rate. Furthermore, if the stored modulation parameter indicates the relevant sub-carrier to be a carrier hole, the relevant sub-carrier can be made a carrier hole by using the stored modulation parameter and thus an occurrence of errors in such a sub-carrier can be suppressed. As a result, it becomes possible to simplify processing, improve the processing speed, and reduce power consumption.

The arrangement may comprise a rank order detecting part detecting, when receiving a frame from the transmission destination of the frame, from the received frame one of information showing the rank order in the table of a modulation parameter used at transmission, information showing a shifted rank order number N (N is a natural number), and information showing a single modulation parameter used at transmission.

Since, as described above, one of information showing the rank order in the table of a modulation parameter used for transmission, information showing a shifted rank order number N (N is a natural number), and information showing a single modulation parameter used for transmission is detected from the received frame, the transmitting side can grasp which modulation parameter is used. Since no modulation information sub-frame is used in the present invention, it becomes possible to reliably grasp modulation parameters by detecting information about modulation parameters.

The present invention also contemplates a wireless communication system comprising the first and second aspects of this arrangement.

With the above configuration, it becomes possible to construct a wireless communication system in which improvement of throughput and reduction of power consumption during transmission are sought. In some aspects, the wireless communication device may be made to function, in a wireless communication system composed of a plurality of wireless communication devices, as an access point relaying communication between wireless communication devices or relaying to an external network, or in communication between a plurality of wireless communication devices, as a wireless communication device that leads the communication.

Since, according to the present invention, no modulation information sub-frame for notifying a transmission source of modulation parameters is inserted into a transmission frame, improvement of throughput and reduction of power consumption during transmission can be sought. Also, since the modulation information sub-frame is not needed, a reception failure of a frame due to an error in the modulation information sub-frame can be avoided. Furthermore, neither channel condition estimation circuit nor modulation parameter calculation circuit becomes necessary, reduction of a circuit size and power consumption can be sought.
In order that the present arrangement be more readily understood, specific examples will now be described with reference to the accompanying drawings.

### Brief Description of the Drawings

Fig. 1 is a block diagram showing an outline configuration of a wireless communication device.
Fig. 2 is a block diagram showing an outline configuration of the wireless communication device.
Fig. 3 is a block diagram showing an outline configuration of an access point.
Fig. 4 is a sequence chart showing an operation of the access point and a terminal unit (wireless communication device).
Fig. 5 is a block diagram showing an outline configuration of a wireless communication device.
Fig. 6 is a block diagram showing an outline configuration of a wireless communication device.
Fig. 7 is a block diagram showing an outline configuration of a wireless communication device.
Fig. 8 is a block diagram showing an outline configuration of an access point.
Fig. 9 is a sequence chart showing an operation of the access point and the terminal unit (wireless communication device).
Fig. 10 is a block diagram showing an outline configuration of a wireless communication device.
Fig. 11 is a block diagram showing an outline configuration of an access point.
Fig. 12 is a sequence chart showing an operation of the access point and the terminal unit (wireless communication device).
Fig. 13 is a diagram exemplifying transmission signal power spectra and modulation parameters.
Fig. 14 is a diagram exemplifying transmission signal power spectra and modulation parameters.
Fig. 15 is a diagram exemplifying transmission signal power spectra and modulation parameters.
Fig. 16 is a diagram exemplifying transmission signal power spectra and modulation parameters.
Fig. 17 is a diagram exemplifying transmission signal power spectra and modulation parameters.
Fig. 18 is a diagram exemplifying transmission signal power spectra and modulation parameters.
Fig. 19 is a diagram exemplifying transmission signal power spectra and modulation parameters.
Fig. 20 is a diagram exemplifying transmission signal power spectra and modulation parameters.
Fig. 21 is a diagram exemplifying a frame format.
Fig. 22 is a diagram exemplifying a frame format.
Fig. 23 is a diagram exemplifying a frame format.
Fig. 24 is a diagram exemplifying a frame format.
Fig. 25 is a block diagram showing an outline configuration of a conventional wireless communication device.
Fig. 26 is a diagram exemplifying transmission signal power spectra and modulation parameters.
Fig. 27 is a diagram exemplifying transmission signal power spectra and modulation parameters.
Fig. 28 is a diagram showing a table configuration example.

### Best Modes for Carrying Out the Invention

The invention is defined in the appended claims. References to embodiments are to be understood as examples useful for understanding the invention.

### (First embodiment)

In a wireless communication system according to a first embodiment, wireless communication is performed between a terminal unit (wireless communication device) and an access point in a multi-carrier transmission system using a frame composed of a plurality of sub-frames. An example is a Time Division Duplex (TDD) system using an Orthogonal Frequency Division Multiplexing (OFDM) transmission system. A wireless communication device applied to this system extracts, upon arrival of a frame from a transmission source, modulation parameters from a modulation information sub-frame for notifying a receiving side of modulation parameters of each sib-carrier in the frame. The extracted modulation parameters are stored and, when transmitting a frame to the transmission source, the wireless communication device uses the stored modulation parameters to perform at least one of coding of transmission data and modulation of each sub-carrier. Then, a frame containing no modulation information sub-frame is transmitted to the transmission source of the frame. Note that the above modulation parameters are assumed to contain at least one of a modulation level of each sub-carrier, a coding rate of transmission data, and a coding mode of transmission data, and information indicating that no sub-carrier exists or a carrier hole exists that does not transport information.

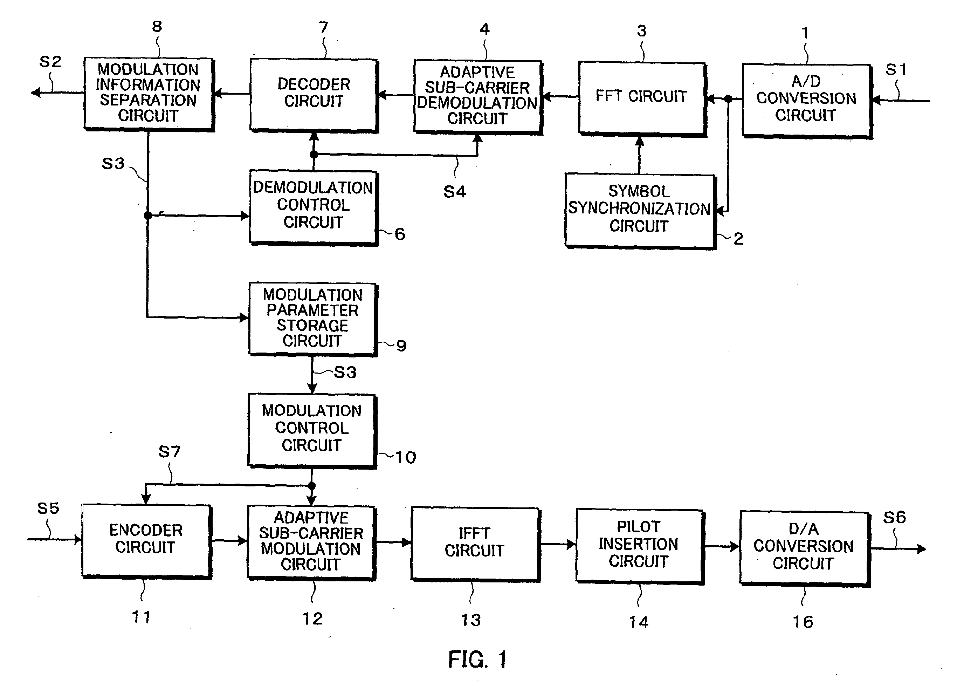

Fig. 1 is a block diagram showing an outline configuration of a terminal unit (wireless communication device) according to the first embodiment. When a frame is received, a received signal S1 is input into an A/D conversion circuit 1. A frame format at this point adopts, as shown in Fig. 24, a configuration similar to that of a conventional technology. The A/D conversion circuit 1 converts the received signal S1 into a digital signal and outputs the digital signal. A symbol synchronization circuit 2 uses a pilot sub-frame of the received signal S1 to synchronize OFDM symbols. An FFT circuit 3 performs a Fourier transformation of the received signal, which has been converted into the digital signal, to convert into a signal for each sub-carrier and inputs the converted signal into an adaptive sub-carrier demodulation circuit 4.

A demodulation control circuit 6 inputs a received frame modulation parameter control signal S4 that instructs to demodulate a modulation information sub-frame using predetermined modulation parameters into at least one of the adaptive sub-carrier demodulation circuit 4 and a decoder circuit 7. The adaptive sub-carrier demodulation circuit 4 demodulates the received signal, which has been converted into a signal for each sub-carrier, according to a modulation level based on the received frame modulation parameter control signal S4. In addition, if no S4 is input, demodulation is performed according to a predetermined modulation level. The decoder circuit 7 decodes the demodulated signal according to at least one of the coding rate and coding mode based on the received frame modulation parameter control signal S4. If no S4 is input, demodulation is performed according to a predetermined coding rate and coding mode.

A modulation information separation circuit 8 extracts a modulation information sub-frame, inputs modulation parameters, that is, received frame modulation parameters S3 of each sub-carrier shown there into the demodulation control circuit 6 and a modulation parameter storage circuit 9, and outputs received data S2. The demodulation control circuit 6 updates the received frame modulation parameter control signal S4 that instructs to demodulate or decode a data sub-frame according to the received frame modulation parameters S3 and inputs the signal S4 into at least one of the adaptive sub-carrier demodulation circuit 4 and the decoder circuit 7. Then, likewise, the adaptive sub-carrier demodulation circuit 4 and the decoder circuit 7 demodulate and decode the data sub-frame based on S4.

The modulation parameter storage circuit 9 stores the received frame modulation parameters S3. This makes it possible to hold the modulation parameters S3 used by a transmission source and use them at transmission.

Further, in the wireless communication device, when transmitting transmission data S5, the modulation parameter storage circuit 9 inputs the stored received frame modulation parameters S3 into a modulation control circuit 10. The modulation control circuit 10 selects modulation parameters of the data sub-frame in a transmission frame based on the received frame modulation parameters S3 and inputs a transmission frame modulation parameter control signal S7 that instructs to encode or modulate according to the selected modulation parameters into at least one of a encoder circuit 11 and an adaptive sub-carrier modulation circuit 12.

The encoder circuit 11 encodes the transmission data S5 according to at least one of the coding rate and coding mode based on the transmission frame modulation parameter control signal S7. In addition, if no S7 is input, encoding is performed based on a predetermined coding rate and coding mode. The adaptive sub-carrier modulation circuit 12 modulates each sub-carrier according to a modulation level based on the transmission frame modulation parameter control signal S7. If no S7 is input, modulation is performed according to a predetermined modulation level. An IFFT circuit 13 performs an inverse Fourier transformation of a signal for each sub-carrier modulated by the adaptive sub-carrier modulation circuit 12 to generate a digital signal of a transmission signal. A pilot insertion circuit 14 inserts a pilot sub-frame into a transmission frame prior to a data sub-frame. Here, the pilot sub-frame may also be inserted in a MAC layer in advance or in a stage prior to the IFFT circuit 13.

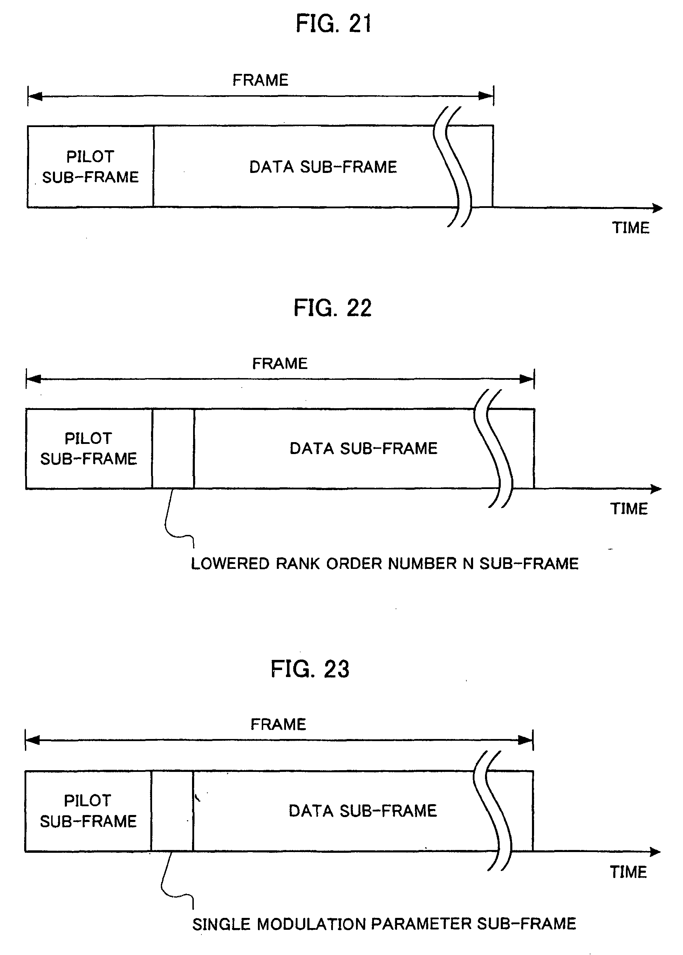

A D/A conversion circuit 16 converts a digital signal of the transmission frame into which the pilot sub-frame has been inserted into an analog signal and outputs a transmission signal S6. The frame format of the transmission signal S6 adopts a configuration as shown in Fig. 21.

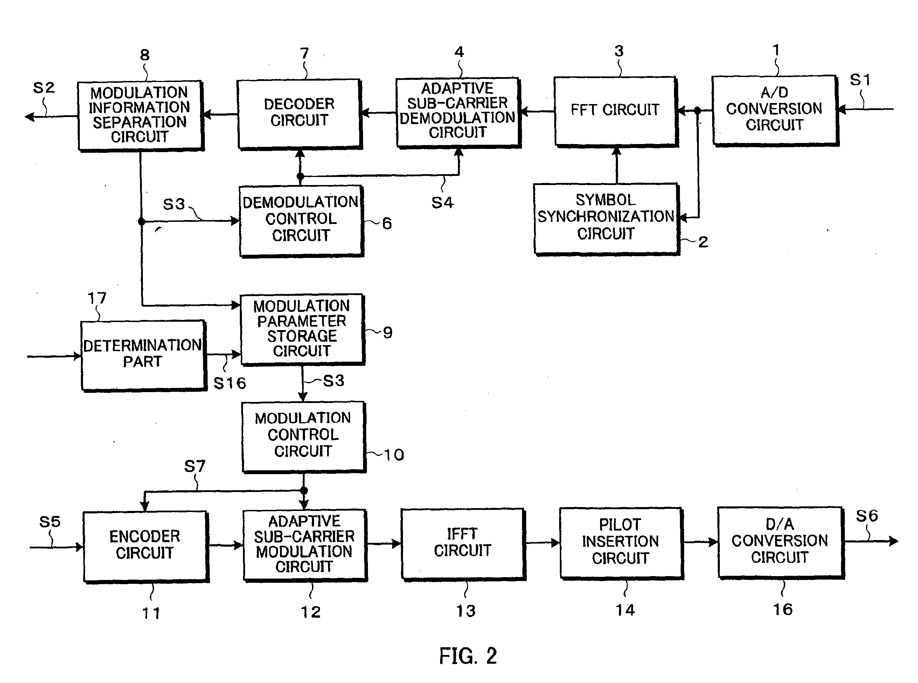

Note that, as shown in Fig. 2, a determination part 17 may be provided that analyzes the received data S2 output by the modulation information separation circuit 8 in an upper layer such as the MAC layer to determine whether a received frame is a frame addressed to an own station. If the received frame is a frame addressed to the own station, the determination part 17 activates an own station addressed frame detection signal S16. At this point, the modulation parameter storage circuit 9 stores the received frame modulation parameters S3 of a frame for which S16 has been activated. Besides, the determination part 17 may also adopt a configuration in which whether a frame is addressed to the own station is determined from S2 in the same layer, instead of the upper layer.

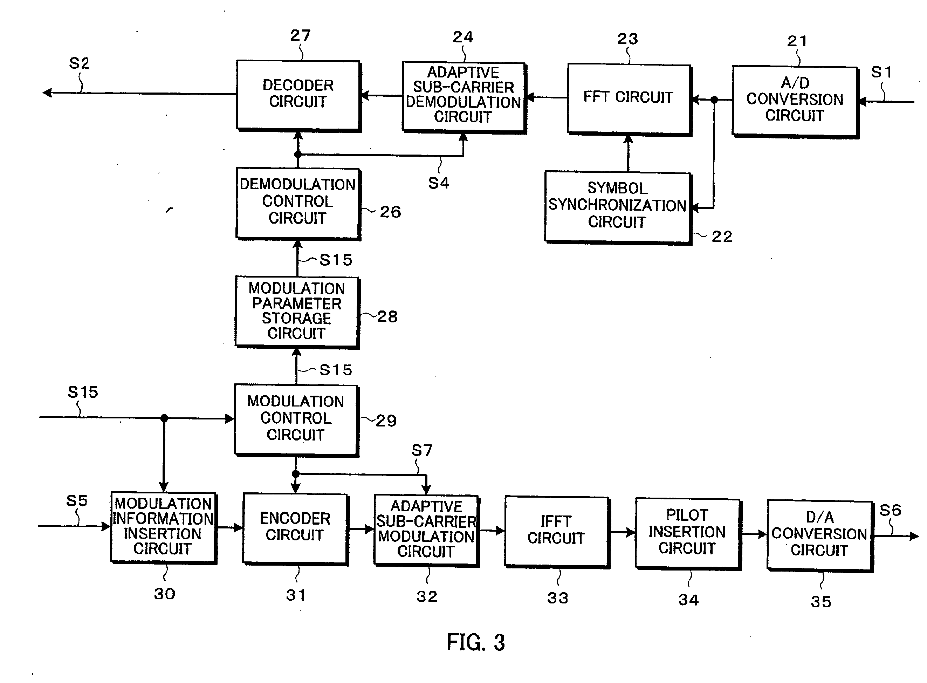

Fig. 3 is a diagram showing an outline configuration of an access point of the wireless communication system according to the first embodiment. At the access point, when a frame is received, a received signal S1 is input into an A/D conversion circuit 21. The frame format at this point adopts, as shown in Fig. 21, a configuration in which no modulation information sub-frame is contained. The A/D conversion circuit 21 converts the received signal S1 into a digital signal and outputs the digital signal. A symbol synchronization circuit 22 uses the pilot sub-frame of the received signal S1 to synchronize OFDM symbols. An FFT circuit 23 performs a Fourier transformation of the received signal, which has been converted into the digital signal, to convert into a signal for each sub-carrier and inputs the converted signal into an adaptive sub-carrier demodulation circuit 24.

A demodulation control circuit 26 reads a transmission frame modulation parameter S15 used for transmitting a frame to the transmission source of the frame from a modulation parameter storage circuit 28, and inputs the received frame modulation parameter control signal S4 that instructs to demodulate based on the read modulation parameters into at least one of the adaptive sub-carrier demodulation circuit 24 and a decoder circuit 27. The adaptive sub-carrier demodulation circuit 24 demodulates the received signal, which has been converted into a signal for each sub-carrier, according to a modulation level based on the received frame modulation parameter control signal S4. In addition, if no S4 is input, demodulation is performed according to a predetermined modulation level. The decoder circuit 27 decodes the demodulated signal according to at least one of the coding rate and coding mode based on the received frame modulation parameter control signal S4 and outputs the received data S2. If no S4 is input, decoding is performed according to a predetermined coding rate and coding mode.

The modulation parameter storage circuit 28 stores the transmission frame modulation parameter S15 input from a modulation control circuit 29. This makes it possible to hold the modulation parameter S15 used at transmission and use it when a frame is received from a transmission destination.

Further, at the access point, when transmitting the transmission data S5, the transmission frame modulation parameter S15 to be used is input into the modulation control circuit 29 and a modulation information insertion circuit 30. The modulation information insertion circuit 30 inserts the transmission frame modulation parameter S15 into the modulation information sub-frame in a frame shown in Fig. 24. Further the modulation control circuit 29 inputs the transmission frame modulation parameter control signal S7 that instructs to encode or modulate the data sub-frame in a transmission frame based on the transmission frame modulation parameter S15 into at least one of a encoder circuit 31 and an adaptive sub-carrier modulation circuit 32. The encoder circuit 31 encodes the transmission data S5 according to at least one of the coding rate and coding mode based on the transmission frame modulation parameter control signal S7. In addition, if no S7 is input, encoding is performed according to a predetermined coding rate and coding mode. The adaptive sub-carrier modulation circuit 32 modulates each sub-carrier according to a modulation level based on the transmission frame modulation parameter control signal S7. If no S7 is input, modulation is performed according to a predetermined modulation level.

An IFFT circuit 33 performs an inverse Fourier transformation of a signal for each sub-carrier modulated by the adaptive sub-carrier modulation circuit 32 to generate a digital signal of a transmission signal. A pilot insertion circuit 34 inserts a pilot sub-frame into a transmission frame prior to a data sub-frame. Here, the pilot sub-frame may also be inserted in the MAC layer in advance or in a stage prior to the IFFT circuit 33. A D/A conversion circuit 35 converts a digital signal of the transmission frame into which the pilot sub-frame has been inserted into an analog signal and outputs the transmission signal S6. The frame format of the transmission signal S6 adopts a configuration as shown in Fig. 24.

The above modulation information separation circuit 8 constitutes an extraction part, the modulation parameter storage circuit 9 constitutes a storage part, and the modulation control circuit 10 constitutes a modulation control part. Also, the modulation parameter storage circuit 28 constitutes a modulation parameter storage part and the demodulation control circuit 26 constitutes a demodulation control part.

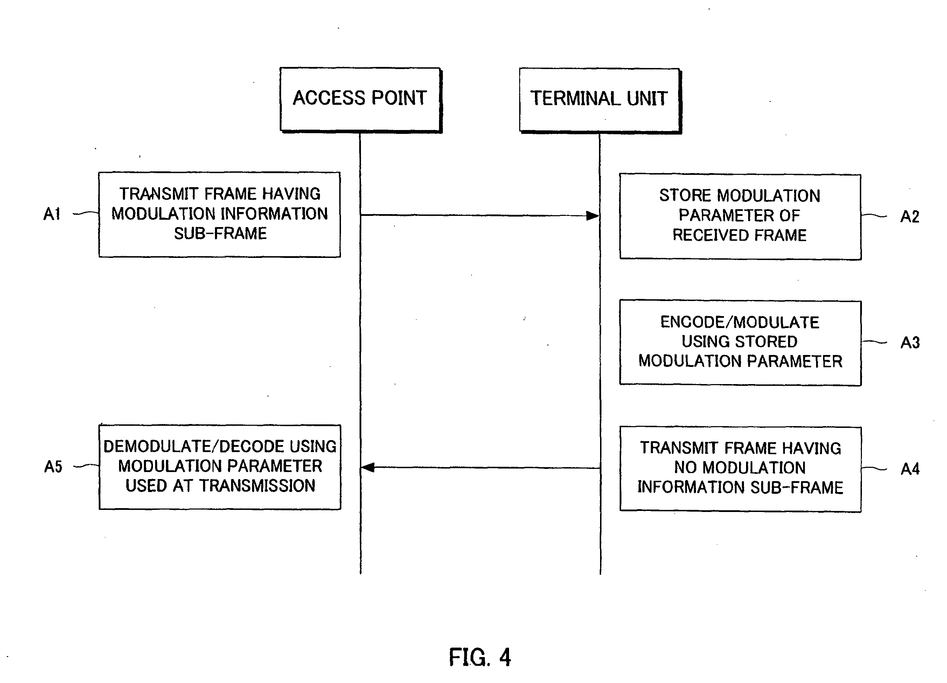

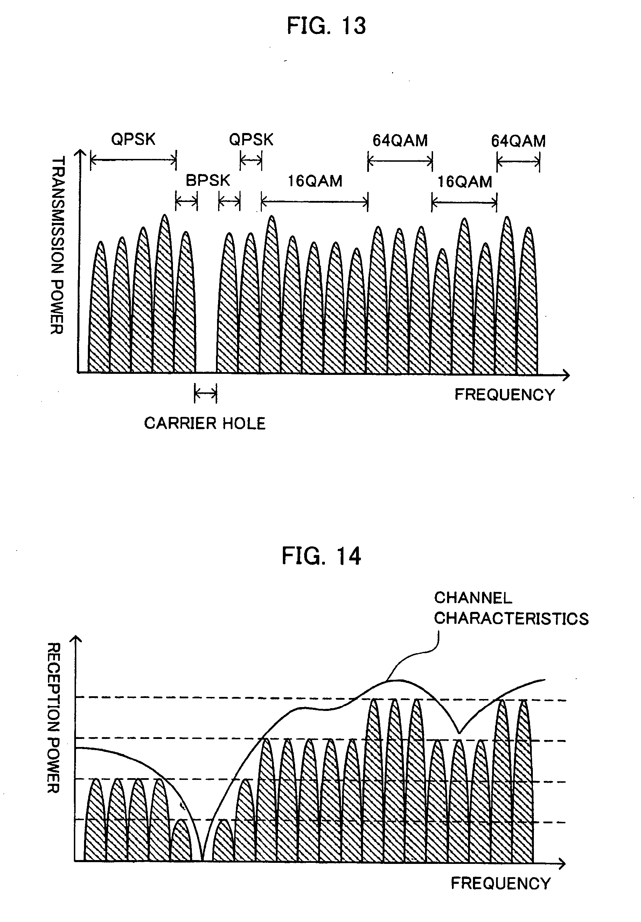

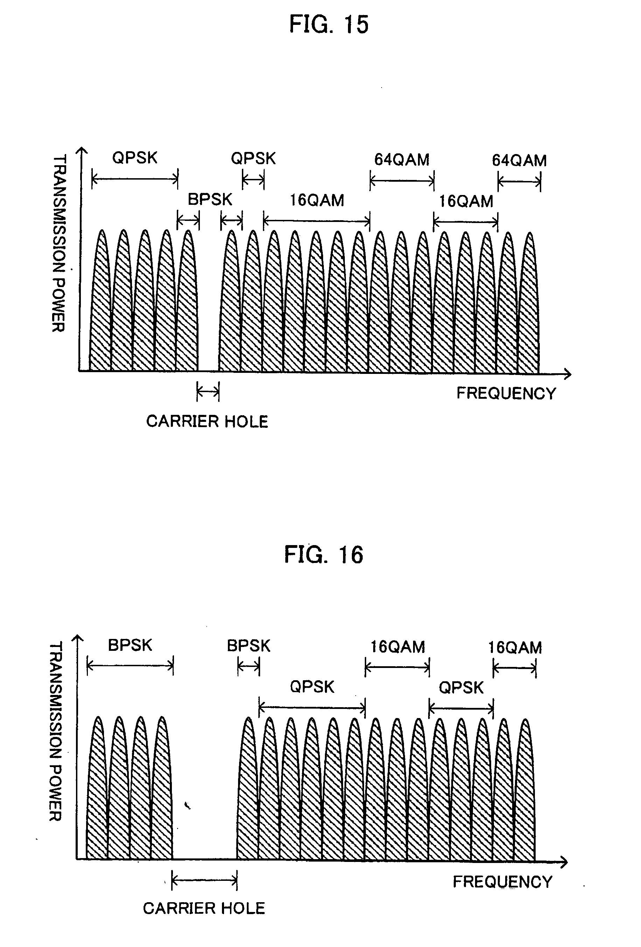

Next, an overview of operation of the wireless communication system configured as described above will be described with reference to Fig. 4. First, the access point transmits a frame having a modulation information sub-frame to a terminal unit (wireless communication device) after inserting a transmission frame modulation parameter into the modulation information sub-frame, encoding the transmission frame modulation parameter, and modulating each sub-carrier (step A1). The access point stores the modulation parameter used at this point. Here, transmission signal power spectra and modulation parameters on the access point side are, for example, those as shown in Fig. 13. Next, received signal power spectra in the terminal unit are, for example, those as shown in Fig. 14. The terminal unit separates the modulation parameters from the received frame and stores them (step A2). When transmitting a frame to the access point, the stored modulation parameter is read and the modulation parameter is used to perform encoding and modulation of each sub-carrier (step A3). Then, a frame having no modulation information sub-frame is transmitted to the access point (step A4). Here, the modulation parameters used by the terminal unit are, as shown in Fig. 15, similar to those transmitted by the access point in Fig. 13. The access point reads the modulation parameters used at transmission to demodulate and decode the received frame (step A5).

Since, as has been described, in the wireless communication device according to the first embodiment, when transmitting a frame to a transmission source (access point) of a frame, modulation parameters used at transmission have been stored, and at least one of encoding of transmission data and modulation of each sub-carrier is performed using the stored modulation parameter, insertion of a modulation information sub-frame for notifying the transmission source (access point) of modulation parameters into a transmission frame can be made unnecessary. As a result, improvement of throughput and reduction of power consumption during transmission can be sought. Also, since the modulation information sub-frame is not needed, a reception failure of a frame due to an error in the modulation information sub-frame can be avoided. Furthermore, neither channel condition estimation circuit nor modulation parameter calculation circuit becomes necessary, reduction of a circuit size and power consumption can be sought.

### (Second embodiment)

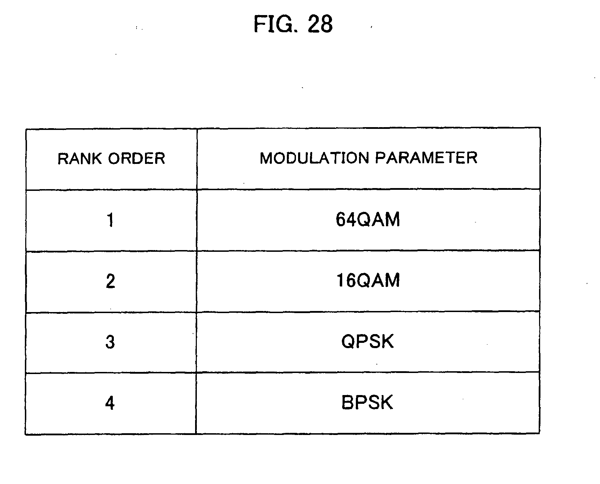

In a wireless communication system according to a second embodiment, a terminal unit (wireless communication device) and an access point have a table in which rank orders are attached to a plurality of modulation parameters. The rank order in the table may be, for example, in descending order of an error rate indicating a ratio of error data to transmission data under the same channel conditions, a ratio of a sub-carrier to noise power required for obtaining the same error rate, an information transmission speed, or the ratio of a signal to interference power, or in descending order or ascending order of a value obtained by combining the above values. In the second embodiment, the rank order will be attached in descending order of these values. Also, carrier holes will be excluded from ranking. More specifically, the table adopts, for example, as shown in Fig. 28, a configuration in which a first rank order is 64QAM, a second rank order is 16QAM, a third rank order is QPSK, and a fourth rank order is BPSK. Then, when transmitting a frame to a transmission source of a frame, the table is searched to identify the rank order of a stored modulation parameter, a modulation parameter whose rank order is lower than that of the stored modulation parameter by N (N is a natural number) or more is extracted from the table, and at least one of encoding of transmission data and modulation of each sub-carrier is performed using the extracted modulation parameter.

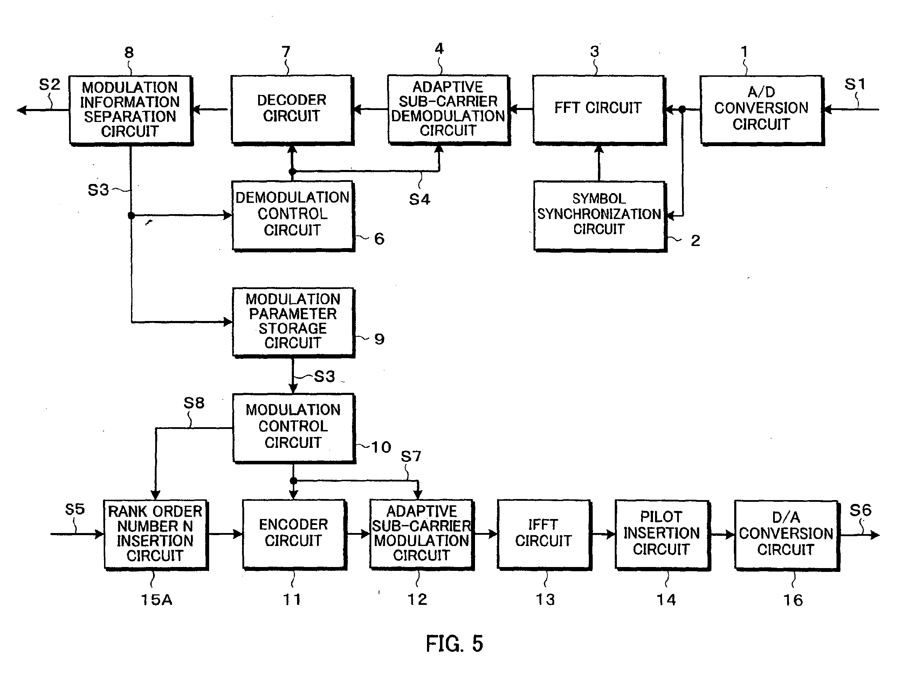

Fig. 5 is a diagram showing an outline configuration of a wireless communication device according to the second embodiment. In the wireless communication device, the modulation control circuit 10 is assumed to have the above table. Then, the modulation control circuit 10 uses modulation parameters whose rank order is lower than that of the modulation parameter stored in the modulation parameter storage circuit 9 by N (N is a natural number). Further, to notify a transmission destination of the lowered rank order number N, a rank order number N insertion circuit 15A is provided to insert a "lowered rank order number N sub-frame" as shown in Fig. 22 into a transmission frame. The configuration in other respects is like that of the wireless communication device according to the first embodiment. Incidentally, the "lowered rank order number N sub-frame" may contain information showing the rank order in the table of modulation parameters used at transmission or information showing a shifted rank order number N (N is a natural number).

In Fig. 5, the modulation control circuit 10 inputs a signal showing the rank order lower than that of the modulation parameter stored in the modulation parameter storage circuit 9 by N, that is, the lowered rank order number N (S8) into the rank order number N insertion circuit 15A. The rank order number N insertion circuit 15A inserts the lowered rank order number N sub-frame shown in Fig. 22 into a transmission frame. Incidentally, if the rank order number N is arranged in advance for a system, the rank order number N insertion circuit 15A is no longer needed and the configuration will be the same as that in the first embodiment.

If a frame addressed to an own station is received in the wireless communication device shown in Fig. 5, the modulation parameter storage circuit 9 stores a modulation parameter of each sub-carrier of the frame and then, when transmitting a frame to a transmission source of the frame, the modulation control circuit 10 identifies the rank order in the table of the modulation parameter of each sub-carrier stored in the modulation parameter storage circuit 9. Then, the modulation control circuit 10 selects a modulation parameter whose rank order is lower than the identified rank order by a natural number N or more as a modulation parameter of each sub-carrier from the above table. If, for example, the stored modulation parameter is the first rank order 64QAM and the rank order is to be lowered by one, the modulation parameter to be used is the second rank order 16QAM. If, here, there is no modulation parameter to be selected, that is, there is no modulation parameter whose rank order is lower than that of the stored modulation parameter by N or more, a relevant sub-carrier is made a carrier hole. In the example of the above table, if the stored modulation parameter is the lowest rank order (fourth) BPSK, the relevant sub-carrier is made a carrier hole because there is no modulation parameter whose rank order is lower than BPSK.

In addition, if, here, a modulation parameter stored in the modulation parameter storage circuit 9 is not a carrier hole and there is no modulation parameter to be selected, that is, there is no modulation parameter whose rank order is lower than that of the stored modulation parameter by N or more, a modulation parameter whose rank order is the lowest in the relevant sub-carrier may be selected. Further, if the modulation parameter that has been stored in the modulation parameter storage circuit 9 is a carrier hole, the relevant sub-carrier is made a carrier hole. The modulation parameter determined in this manner is used as a modulation parameter of each sub-carrier.

Based on a result determined as described above, the modulation control circuit 10 generates a transmission frame modulation parameter control signal S7 and inputs the signal S7 into the encoder circuit 11 and the adaptive sub-carrier modulation circuit 12.

Note that, the above natural number N may be "one" in all sub-carriers or any other natural number. Also, the natural number N may be determined from the rate of channel condition fluctuations, an interval between a received frame and a transmission frame, the error rate of a received frame, the length of data to be transmitted, or the number of bits that can be transmitted per OFDM symbol determined from each sub-carrier and a modulation parameter thereof.

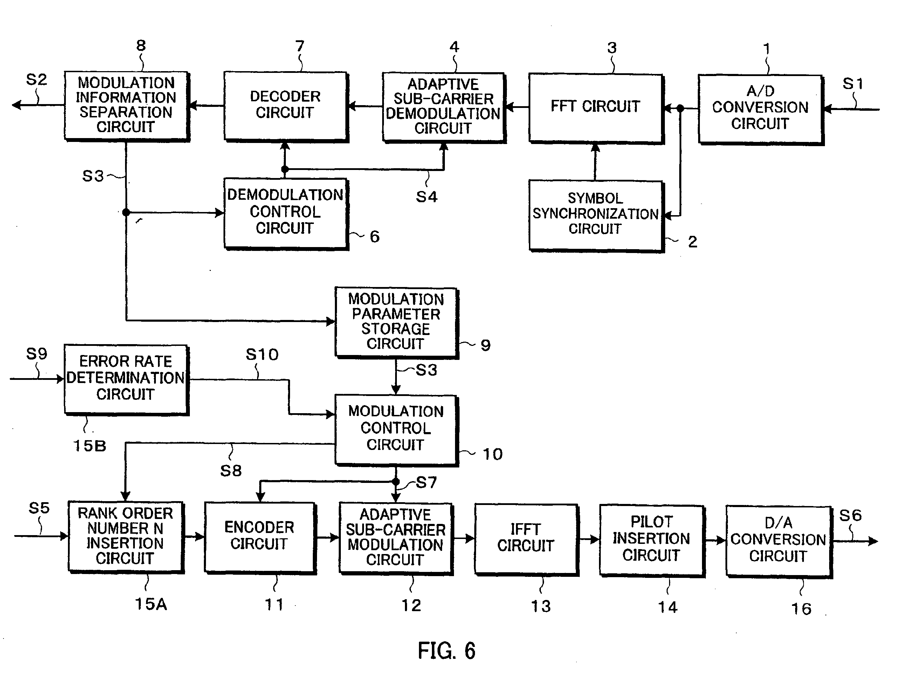

Fig. 6 is a diagram showing an outline configuration of a wireless communication device having a function to determine a natural number N from the error rate of a received frame. In this configuration, information S9 about the frame error rate is input from an upper layer (MAC) and N is determined by an error rate determination circuit 15B that determines the error rate. A determination result of the error rate determination circuit 15B is input into the modulation control circuit 10 as a lowered rank order number instruction signal S10. The frame error rate may be determined from the received data S2 in this layer, instead of the upper layer.

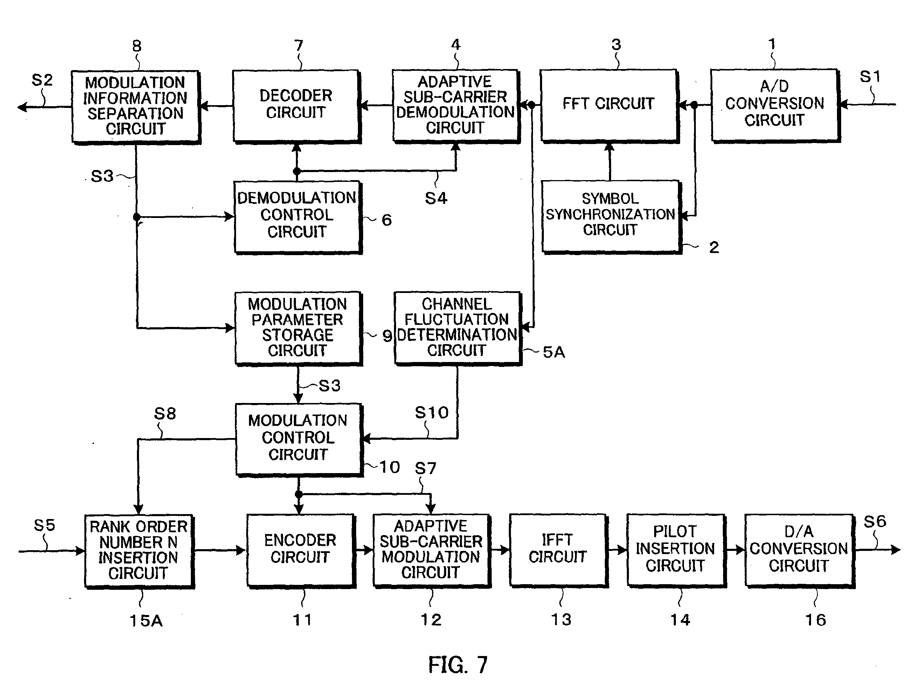

Fig. 7 is a diagram showing an outline configuration of a wireless communication device having a function to determine a natural number N from the rate of channel condition fluctuations. In this configuration, N is determined by a channel fluctuation determination circuit 5A, which determines the rate of channel condition fluctuations, from a received signal for each sub-carrier of an output signal of the FFT circuit 3. A method for determining the rate of channel condition fluctuations is, for example, to compare received power of each sub-carrier at two points (or more) in time and determine the rate of channel condition fluctuations from an amount of change. The above natural number N may be increased when the rate of channel condition fluctuations is high and N may be decreased when the rate of channel condition fluctuations is low. By detecting the rate of channel condition fluctuations and increasing N (N is a natural number) when the detected rate is high, as described above, it becomes possible to reduce an effect of frequency selective fading and perform highly efficient communication. By decreasing N (N is a natural number) when the rate of channel fluctuations is low, on the other hand, it becomes possible to improve resistance to channel fluctuations and reduce the error rate.

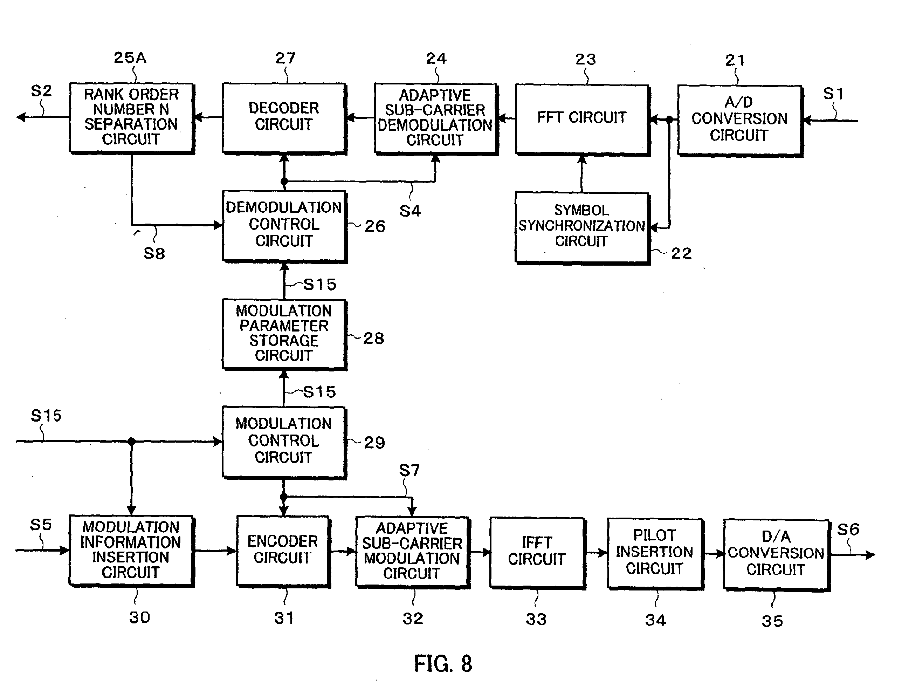

Fig. 8 is a diagram showing an outline configuration of an access point in the wireless communication system according to the second embodiment. The access point has a rank order number N separation circuit 25A that separates, when a frame having the configuration shown in Fig. 22 is received from the terminal unit (wireless communication device), a lowered rank order number N sub-frame from the frame. The rank order number N separation circuit 25A inputs a separated lowered rank order number N (S8) into the demodulation control circuit 26.

The demodulation control circuit 26 has, like the wireless communication device, a table as shown in Fig. 28. The rank order in the table is in descending order of the error rate indicating the ratio of error data to transmission data under the same channel conditions, the ratio of a sub-carrier to noise power required for obtaining the same error rate, or the information transmission speed, or a value determined by combining these values. Also, carrier holes will be excluded from ranking. More specifically, the table adopts, for example, the configuration in which the first rank order is 64QAM, the second rank order is 16QAM, the third rank order is QPSK, and the fourth rank order is BPSK. The demodulation control circuit 26 reads the transmission frame modulation parameter S15 used for transmitting a frame to the wireless communication device, which is the transmission source of the above frame, from the modulation parameter storage circuit 28 to identify the rank order of the modulation parameter. Then, the demodulation control circuit 26 extracts, based on the lowered rank order number N (S8) that has been input, a modulation parameter whose rank order is lower than that of the modulation parameter read from the modulation parameter storage circuit 28 by N from the table and inputs the received frame modulation parameter control signal S4 that instructs to demodulate based on the extracted modulation parameter into at least one of the adaptive sub-carrier demodulation circuit 24 and the decoder circuit 27. The adaptive sub-carrier demodulation circuit 24 demodulates the received signal, which has been converted into a signal for each sub-carrier, according to a modulation level based on the received frame modulation parameter control signal S4.

The above channel fluctuation determination circuit 5A constitutes a detecting part and the rank number N separation circuit 25A constitutes a rank detecting part.

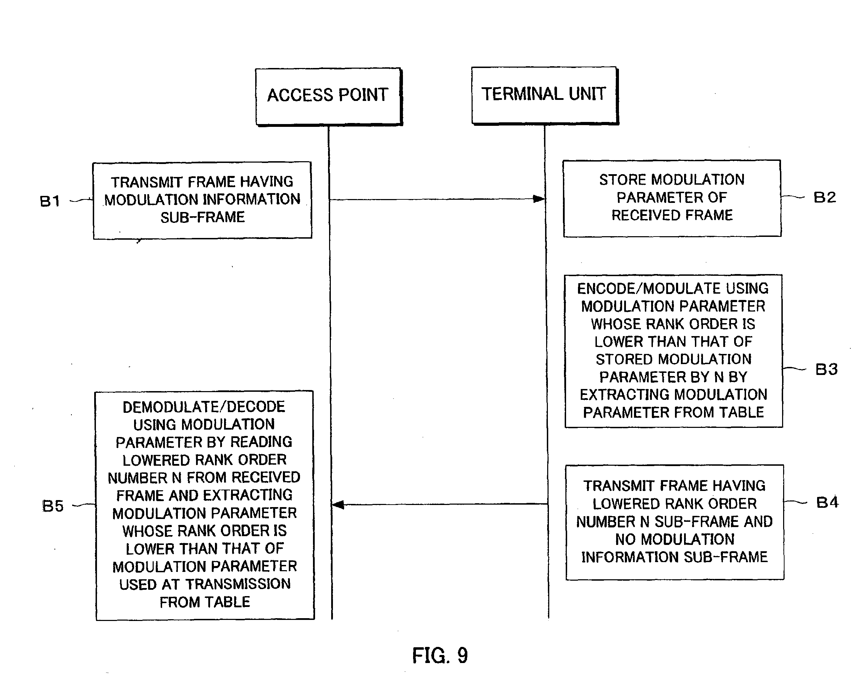

Next, an overview of operation of the wireless communication system configured as described above will be described with reference to Fig. 9. Here, the lowered rank order number N is assumed to be "one". First, the access point transmits a frame having a modulation information sub-frame as shown in Fig. 24 to a terminal unit (wireless communication device) after inserting a transmission frame modulation parameter into the modulation information sub-frame, encoding the transmission frame modulation parameter, and modulating each sub-carrier (step B1). The access point stores the modulation parameter used at this point. Also, transmission signal power spectra and modulation parameters on the access point side are, for example, those as shown in Fig. 13. Next, received signal power spectra in the terminal unit are, for example, those as shown in Fig. 14. The terminal unit separates a modulation parameter from the received frame and stores it (step B2). When transmitting a frame to the access point, a parameter whose rank order in the above table is lower than that of the stored modulation parameter by N is extracted from the table and the parameter is used to perform encoding and modulation of each sub-carrier (step B3). Here, the modulation parameters used by the terminal unit have, as shown in Fig. 16, rank orders lower than those of modulation parameters transmitted by the access point by one in Fig. 13.

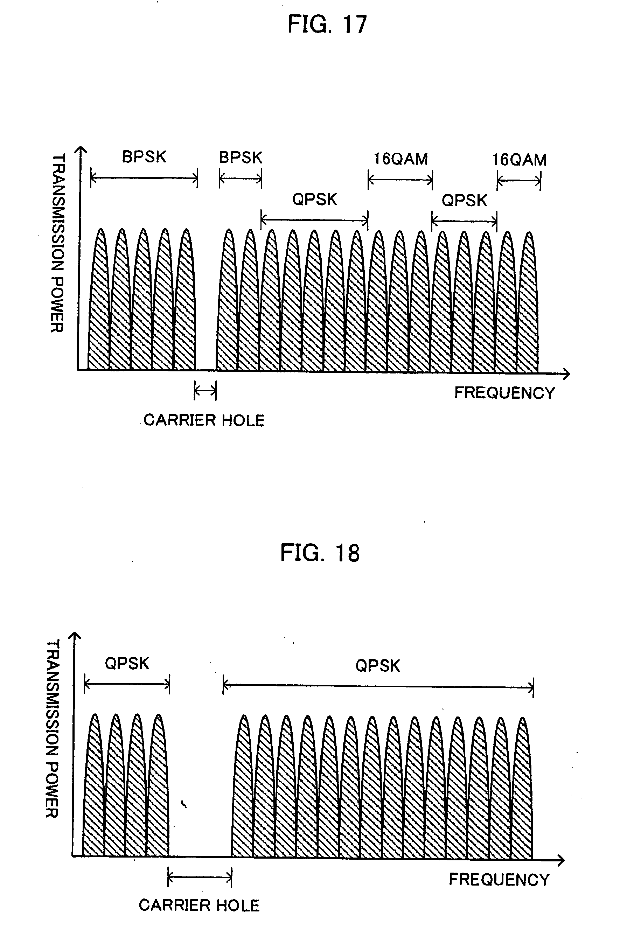

Here, in Fig. 13, since there is no modulation parameter whose rank order is lower than that of the lowest rank order BPSK by one, as shown in Fig. 16, sub-carriers thereof are made carrier holes. In addition, if no modulation parameter exists whose rank order is lower than that of the lowest rank order BPSK by one like this case, as shown in Fig. 17, the lowest rank order modulation parameter, that is, BPSK may also be used. Then, a frame having no modulation information sub-frame is transmitted to the access point (step B4). At the access point, the lowered rank order number N is read from the frame received by the terminal unit, a modulation parameter whose rank order in the above table is lower than that of the modulation parameter used at transmission by N is extracted, and the received frame is demodulated and decoded (step B5).

Since, as has been described, in the wireless communication device according to the second embodiment, a modulation parameter whose rank order is lower than that of the modulation parameter stored in the modulation parameter storage circuit 9 by N (N is a natural number) is used, receiving characteristics improve and it becomes possible to improve resistance to channel condition fluctuations and reduce the error rate. In addition, if no modulation parameter exists in the above table whose rank order is lower than that of the modulation parameter stored in the modulation parameter storage circuit 9 by N (N is a natural number) or more, the relevant sub-carrier may be made a carrier hole. This can suppress an occurrence of errors in the relevant sub-carrier.

Furthermore, if a modulation parameter stored in the modulation parameter storage circuit 9 is not to indicate a relevant sub-carrier to be a carrier hole and no modulation parameter exists in the above table whose rank order is lower than that of the stored modulation parameter by N (N is a natural number) or more, the lowest rank order modulation parameter is extracted from the above table to use it. This makes it possible to improve resistance to channel condition fluctuations and reduce the error rate by using a modulation parameter with excellent receiving characteristics. Besides, if a modulation parameter stored in the modulation parameter storage circuit 9 is to indicate a relevant sub-carrier to be a carrier hole, the stored modulation parameter is used. This makes it possible to suppress an occurrence of errors in the relevant sub-carrier. As a result, it becomes possible to simplify processing, improve the processing speed, and reduce power consumption.

### (Third embodiment)

A wireless communication device of a wireless communication system according to a third embodiment has, like the wireless communication device according to the second embodiment, a table in which rank orders are attached to a plurality of modulation parameters. The rank order in the table will be, like in the second embodiment, in descending order of the error rate indicating the ratio of error data to transmission data under the same channel conditions, the ratio of a sub-carrier to noise power required for obtaining the same error rate, or the information transmission speed, or a value determined by combining these values. Also, carrier holes will be excluded from ranking. More specifically, the above table adopts, for example, as shown in Fig. 28, the configuration in which the first rank order is 64QAM, the second rank order is 16QAM, the third rank order is QPSK, and the fourth rank order is BPSK. Then, when transmitting a frame to a transmission source (access point) of a frame, a single modulation parameter is extracted from the above table to use it. Besides, if the above table is searched to identify the rank order of a modulation parameter stored after extracting it from a received frame and the rank order of the stored modulation parameter is found to be lower than that of the single modulation parameter, the relevant sub-carrier is made a carrier hole.

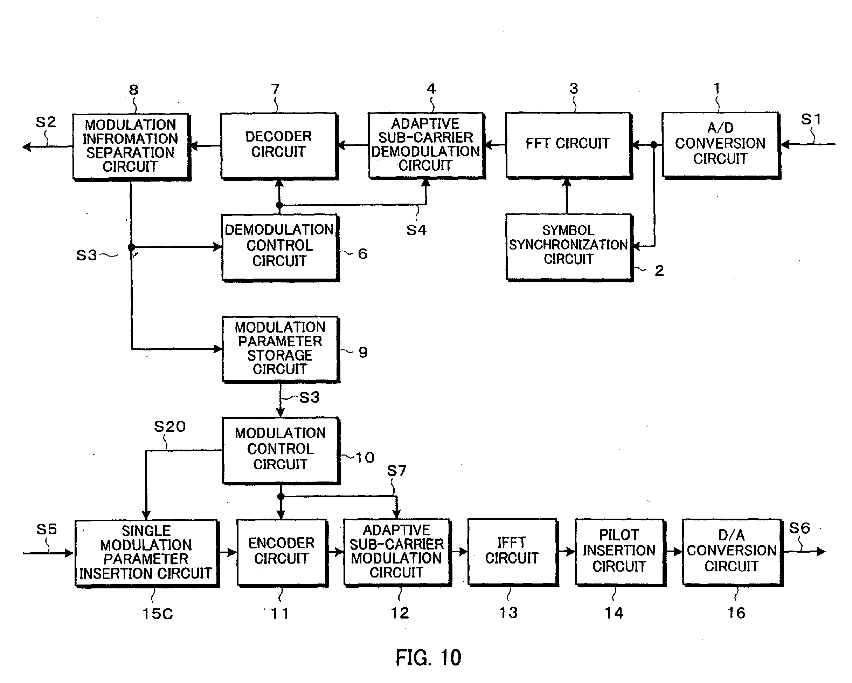

Fig. 10 is a diagram showing an outline configuration of the wireless communication device according to the third embodiment. In the wireless communication device, the modulation control circuit 10 is assumed to have the above table. Then, the modulation control circuit 10 extracts a single modulation parameter from the above table. For notification of the extracted single modulation parameter, a single modulation parameter insertion circuit 15C is provided to insert a "single modulation parameter sub-frame" as shown in Fig. 23 into a transmission frame. The configuration in other respects is like that of the wireless communication device according to the first embodiment.

If a frame addressed to an own station is received in a wireless communication device shown in Fig. 10, a modulation parameter of each sub-carrier of the frame is stored in the modulation parameter storage circuit 9 and then, when transmitting a frame to the transmission source of the above frame, the modulation control circuit 10 selects a single modulation parameter from the above table. Also, the modulation control circuit 10 identifies the rank order in the above table of the modulation parameter stored in the modulation parameter storage circuit 9. Then, if the rank order of the modulation parameter stored in the modulation parameter storage circuit 9 is lower than that of the single modulation parameter, the relevant sub-carrier is made a carrier hole.

Further, if, here, a modulation parameter stored in the modulation parameter storage circuit 9 is not a carrier hole and the rank order of the stored modulation parameter is lower than that of the single modulation parameter, the modulation parameter stored in the modulation parameter storage circuit 9 is used only for the relevant sub-carrier. If a modulation parameter stored in the modulation parameter storage circuit 9 is to indicate a relevant sub-carrier to be a carrier hole, the relevant sub-carrier is made a carrier hole. The modulation parameter determined in this manner is used as a modulation parameter of each sub-carrier.

Based on a result determined as described above, the modulation control circuit 10 generates a transmission frame modulation parameter control signal S7 and inputs the signal S7 into the encoder circuit 11 and the adaptive sub-carrier modulation circuit 12. The modulation control circuit 10 also inputs a single modulation parameter S20, which is information showing a single modulation parameter extracted as described above, into the single modulation parameter insertion circuit 15C. Incidentally, if a single modulation parameter is arranged in advance for a system, the single modulation parameter insertion circuit 15C is made unnecessary and the configuration will be the same as that of the wireless communication system according to the first embodiment.

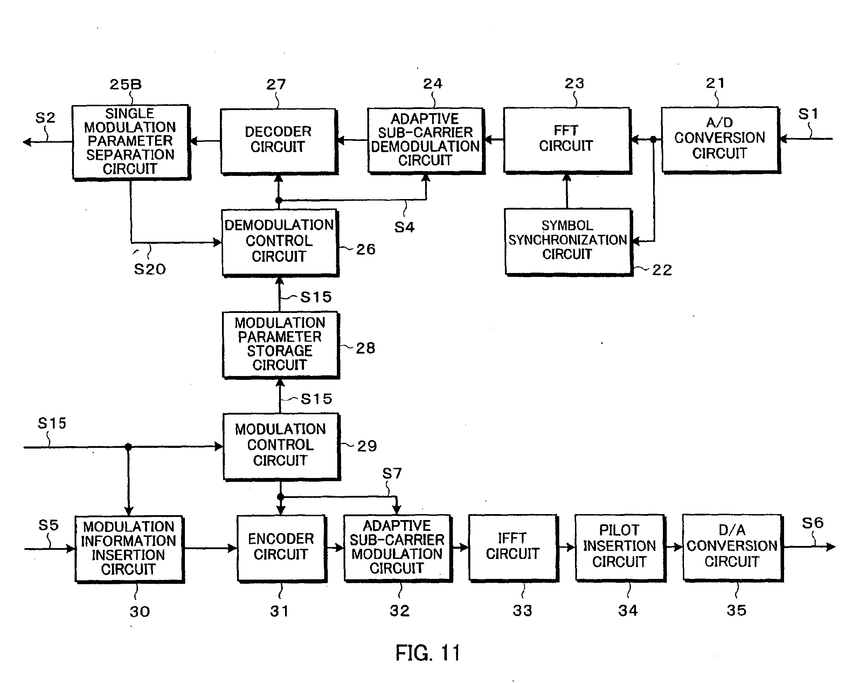

Fig. 11 is a diagram showing an outline configuration of an access point in the wireless communication system according to the third embodiment. The access point has a single modulation parameter separation circuit 25B that separates, when a frame having the configuration shown in Fig. 23 is received from the above terminal unit (wireless communication device), a single modulation parameter sub-frame from the frame. The single modulation parameter separation circuit 25B inputs a separated single modulation parameter S20 into the demodulation control circuit 26.

The demodulation control circuit 26 inputs the received frame modulation parameter control signal S4 that instructs to demodulate based on the single modulation parameter S20 into at least one of the adaptive sub-carrier demodulation circuit 24 and the decoder circuit 27. The adaptive sub-carrier demodulation circuit 24 demodulates the received signal, which has been converted into a signal for each sub-carrier, according to a modulation level based on the received frame modulation parameter control signal S4.

The above single modulation parameter separation circuit 25B constitutes a rank order detecting part.

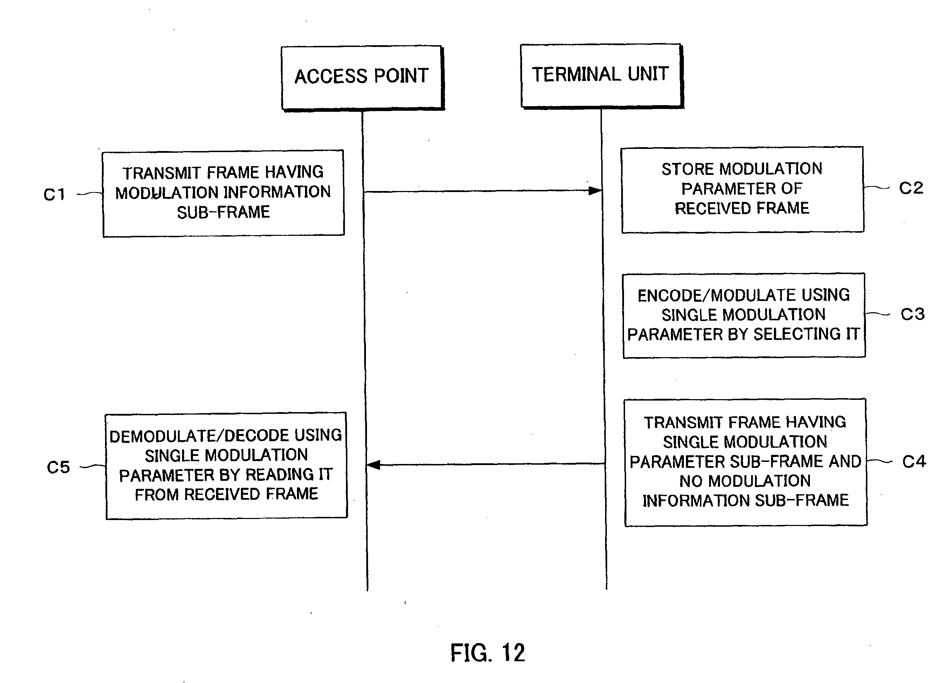

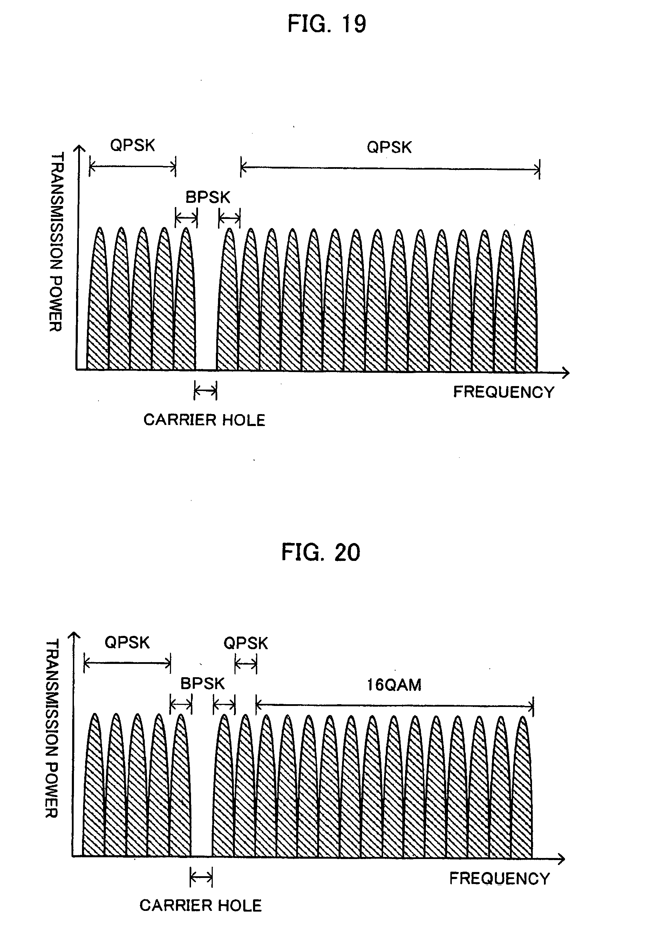

Next, an overview of operation of the wireless communication system configured as described above will be provided with reference to Fig. 12. Here, the lowered rank order number N is assumed to be "one". First, the access point transmits a frame having a modulation information sub-frame as shown in Fig. 24 to a terminal unit (wireless communication device) after inserting a transmission frame modulation parameter into the modulation information sub-frame, encoding the transmission frame modulation parameter, and modulating each sub-carrier (step C1). The access point stores the modulation parameter used at this point. In addition, transmission signal power spectra and modulation parameters on the access point side are, for example, those as shown in Fig. 13. Next, received signal power spectra in the terminal unit are, for example, those as shown in Fig. 14. The terminal unit separates the modulation parameter from the received frame and stores it (step C2). When transmitting a frame to the access point, a single modulation parameter is extracted from the above table and the single modulation parameter is used to perform encoding and modulation of each sub-carrier (step C3). Here, the modulation parameter used by the terminal unit is, as shown in Fig. 18, a single modulation parameter, more specifically, QPSK. Here, since the rank order of BPSK (fourth rank) is lower than that of QPSK (third rank), which is the single selected modulation parameter, sub-carriers in which BPSK was used for transmission in Fig. 13 are made carrier holes in Fig. 18. Sub-carriers in which BPSK was used for transmission in Fig. 13 may also use, as shown in Fig. 19, BPSK, which is a stored modulation parameter.

Furthermore, as shown in Fig. 20, the single modulation parameter is the second-rank order 16QAM, a modulation parameter stored in the modulation parameter storage circuit 9 is not a carrier hole, and the rank order of the stored modulation parameter is lower than that of the single modulation parameter (16QAM) (second rank), that is, the third-rank order QPSK or the fourth-rank order BPSK, these modulation parameters are used for only relevant sub-carriers. If a modulation parameter stored in the modulation parameter storage circuit 9 indicates a relevant sub-carrier to be a carrier hole, the relevant sub-carrier may be made a carrier hole.

Then, a frame having a single modulation information sub-frame and not having a modulation information sub-frame is transmitted to the access point (step C4). At the access point, the single modulation parameter is read from the frame received from the terminal unit and the received frame is demodulated and decoded (step C5).

Since, as has been described, in the wireless communication device according to the third embodiment, a single modulation parameter is used as a modulation parameter of a transmission frame, processing related to coding for transmission data, processing related to adaptive sub-carrier modulation, and control for the above processing are no longer needed and thus a circuit configuration can be simplified. In addition, if, for example, the rank order of modulation parameters is in descending order of the error rate indicating the ratio of error data to transmission data under the same channel conditions, the ratio of a sub-carrier to noise power required for obtaining the same error rate, or the information transmission speed, and the rank order of the stored modulation parameter is lower than that of the single modulation parameter, the relevant sub-carrier can be made a carrier hole, and thus an occurrence of errors in such a sub-carrier can be suppressed. As a result, it becomes possible to simplify processing, improve the processing speed, and reduce power consumption.

Furthermore, since, if the rank order of the stored modulation parameter is lower than that of the single modulation parameter, the stored modulation parameter is extracted and used only for the relevant sub-carrier, receiving characteristics improve and it becomes possible to improve resistance to channel condition fluctuations and reduce the error rate. Moreover, if the stored modulation parameter indicates the relevant sub-carrier to be a carrier hole, the relevant sub-carrier can be made a carrier hole by using the stored modulation parameter and thus an occurrence of errors in such a sub-carrier can be suppressed. As a result, it becomes possible to simplify processing, improve the processing speed, and reduce power consumption.

Note that, in addition to the above-described embodiments, in the wireless communication device, the lowest-rank modulation parameter may be extracted from the table to use it when transmitting a frame to the transmission source (access point) of the frame and a modulation parameter stored in the storage part may be used when the modulation parameter stored in the storage part indicates a relevant sub-carrier to be a carrier hole. This makes it possible to improve resistance to channel condition fluctuations and reduce the error rate. Also, if the stored modulation parameter indicates a relevant sub-carrier to be a carrier hole, the relevant sub-carrier can be made a carrier hole by using the stored modulation parameter and thus an occurrence of errors in such a sub-carrier can be suppressed. As a result, it becomes possible to simplify processing, improve the processing speed, and reduce power consumption.

### Explanation of reference manuals

- 4:: Adaptive sub-carrier demodulation circuit
- 5A:: Channel fluctuation determination circuit
- 6:: Demodulation control circuit
- 7:: Decoder circuit
- 8:: Modulation information separation circuit
- 9:: Modulation parameter storage circuit
- 10:: Modulation control circuit
- 11:: Encoder circuit
- 12:: Adaptive sub-carrier modulation circuit
- 15A:: Rank order number N insertion circuit
- 15B:: Error rate determination circuit
- 15C:: Single modulation parameter insertion circuit
- 16:: D/A conversion circuit
- 17:: Determination part
- 24:: Adaptive sub-carrier demodulation circuit
- 25A:: Rank order number N separation circuit
- 25B:: Single modulation parameter separation circuit
- 26:: Demodulation control circuit
- 27:: Decoder circuit
- 28:: Modulation parameter storage circuit
- 29:: Modulation control circuit
- 30:: Modulation information insertion circuit
- 31:: Encoder circuit
- 32:: Adaptive sub-carrier modulation circuit

## Claims

1. A terminal unit adapted to perform wireless communication between an access point and said terminal unit in a multi-carrier transmission system using a frame composed of a plurality of sub-frames, comprising:
an extraction part (8) adapted to extract a first modulation parameter from a modulation information sub-frame which constitutes a part of a downlink frame received from said access point;
a storage part (9) adapted to store said first modulation parameter; and
a modulation control part (10)
having a plurality of predetermined modulation parameters, and
adapted to perform at least one of coding of transmission data and modulation of each sub-carrier using a second modulation parameter which is one of the predetermined modulation parameters for an uplink frame to said access point, wherein
said second modulation parameter is derived, by said modulation control part (10), based on said first modulation parameter and a predetermined rule common to said terminal unit and said access point,
said predetermined rule including that information transmission speed for said second modulation parameter being lower than information transmission speed for said first modulation parameter.

2. An access point that is adapted to perform wireless communication between said access point and a terminal unit in a multi-carrier transmission system using a frame composed of a plurality of sub-frames, comprising:
a modulation parameter storage part (28) adapted to store a first modulation parameter of each sub-carrier of a down link frame to be transmitted to the terminal unit; and
a demodulation control part (26)
having a plurality of predetermined modulation parameters, and
adapted to perform at least one of decoding of received data and demodulation of each sub-carrier using a second modulation parameter which is one of the predetermined modulation parameters for an uplink frame received from said terminal unit
wherein
said second modulation parameter is derived, by said demodulation control part (26), based on said first modulation parameter and a predetermined rule common to said terminal unit and said access point,
said predetermined rule including that information transmission speed for said second modulation parameter being lower than information transmission speed for said first modulation parameter.

3. A wireless communication system comprising the terminal unit according to claim 1 and said access point according claim 2.

## Patentansprüche

1. Datenendgerät, das ausgelegt ist, eine Drahtloskommunikation zwischen einem Zugangspunkt und dem Datenendgerät in einem Mehrfachträgerübertragungssystem unter Verwendung eines Rahmens, bestehend aus einer Mehrzahl von Subrahmen, auszuführen, mit:
einem Extraktionselement (8), das ausgelegt ist, einen ersten Modulationsparameter aus einem Modulationsinformation-Subrahmen zu extrahieren, der einen Teil eines von dem Zugangspunkt empfangenen Downlink-Rahmens bildet,
einem Speicherelement (9), das ausgelegt ist, den ersten Modulationsparameter zu speichern; und
einem Modulationssteuerelement (10)
mit einer Mehrzahl von vorbestimmten Modulationsparametern, und
das ausgelegt ist, zumindest eines von Kodieren von Übertragungsdaten und Modulieren jedes Zwischenträgers unter Verwendung eines zweiten Modulationsparameters, der einer der vorbestimmten Modulationsparameter für einen Uplink-Rahmen an den Zugangspunkt ist, auszuführen,
wobei
der zweite Modulationsparameter durch das Modulationssteuerelement (10) basierend auf dem ersten Modulationsparameter und einer dem Datenendgerät und dem Zugangspunkt gemeinen vorbestimmten Regel abgeleitet wird,
die vorbestimmte Regel beinhaltet, dass eine Informationsübertragungsgeschwindigkeit für den zweiten Modulationsparameter geringer ist als eine Informationsübertragungsgeschwindigkeit für den ersten Modulationsparameter.

2. Zugangspunkt, der ausgelegt ist, eine Drahtloskommunikation zwischen dem Zugangspunkt und einem Datenendgerät in einem Mehrfachträgerübertragungssystem unter Verwendung eines Rahmens, bestehend aus einer Mehrzahl von Subrahmen, auszuführen, mit:
einem Modulationsparameterspeicherelement (28), das ausgelegt ist, einen ersten Modulationsparameter jedes Zwischenträgers eines an das Datenendgerät zu übertragenden Downlink-Rahmens zu speichern; und
einem Demodulationssteuerelement (26)
mit einer Mehrzahl von vorbestimmten Modulationsparametern, und
das ausgelegt ist, zumindest eines von Dekodieren von empfangenen Daten und Demodulieren jedes Zwischenträges unter Verwendung eines zweiten Modulationsparameters, der einer der vorbestimmten Modulationsparameter für einen von dem Datenendgerät empfangenen Uplink-Rahmen ist, auszuführen
wobei
der zweite Modulationsparameter durch das Demodulationssteuerelement (26) basierend auf dem ersten Modulationsparameter und einer dem Datenendgerät und dem Zugangspunkt gemeinen vorbestimmten Regel abgeleitet wird,
die vorbestimmte Regel beinhaltet, dass eine Informationsübertragungsgeschwindigkeit für den zweiten Modulationsparameter geringer ist als eine Informationsübertragungsgeschwindigkeit für den ersten Modulationsparameter.

3. Drahtloskommunikationssystem mit dem Datenendgerät nach Anspruch 1 und dem Zugangspunkt nach Anspruch 2.

## Revendications

1. Unité de terminal apte à réaliser une communication sans fil entre un point d'accès et ladite unité de terminal dans un système de transmission multiporteuse utilisant une trame composée de plusieurs sous-trames, comprenant :
une partie d'extraction (8) apte à extraire un premier paramètre de modulation d'une sous-trame d'informations de modulation qui constitue une partie d'une trame de liaison descendante reçue dudit point d'accès ;
une partie de stockage (9) apte à stocker le premier paramètre de modulation ; et
une partie de commande de modulation (10)
comportant plusieurs paramètres de modulation prédéterminés, et
apte à réaliser le codage des données de transmission et/ou la modulation de chaque sous-porteuse en utilisant un second paramètre de modulation qui est l'un des paramètres de modulation prédéterminés pour une trame de liaison ascendante vers le point d'accès,
étant précisé que
le second paramètre de modulation est dérivé, par la partie de commande de modulation (10), sur la base du premier paramètre de modulation et d'une règle prédéterminée commune à l'unité de terminal et au point d'accès,
la règle prédéterminée contenant le fait que la vitesse de transmission d'informations pour le second paramètre de modulation est inférieure à la vitesse de transmission d'informations pour le premier paramètre de modulation.

2. Point d'accès qui est apte à réaliser une communication sans fil entre ledit point d'accès et une unité de terminal dans un système de transmission multiporteuse utilisant une trame composée de plusieurs sous-trames, comprenant :
une partie de stockage de paramètres de modulation (28) apte à stocker un premier paramètre de modulation de chaque sous-porteuse d'une trame de liaison descendante à transmettre à l'unité de terminal ; et
une partie de commande de démodulation (26)
comportant plusieurs paramètres de modulation prédéterminés, et
apte à réaliser le décodage des données reçues et/ou la démodulation de chaque sous-porteuse en utilisant un second paramètre de modulation qui est l'un des paramètres de modulation prédéterminés pour une trame de liaison ascendante reçue de l'unité de terminal,
étant précisé que
le second paramètre de modulation est dérivé, par la partie de commande de démodulation (26), sur la base du premier paramètre de modulation et d'une règle prédéterminée commune à l'unité de terminal et au point d'accès,
la règle prédéterminée contenant le fait que la vitesse de transmission d'informations pour le second paramètre de modulation est inférieure à la vitesse de transmission d'informations pour le premier paramètre de modulation.

3. Système de communication sans fil comprenant l'unité de terminal selon la revendication 1 et le point d'accès selon la revendication 2.
